# EUROPÄISCHE PATENTANMELDUNG

(11) **EP 4 177 121 A2**
(43) Veröffentlichungstag der Anmeldung: **10.05.2023**
(21) Anmeldenummer: 22205927.1
(22) Anmeldetag: 07.11.2022
(51) Int. Cl.: B60T 7/10, B62L 3/02

(54) **GEBEREINHEIT ZUR BEREITSTELLUNG VON DRUCKBEAUFSCHLAGTEM HYDRAULIKMEDIUM**

(30) Priorität: 08.11.2021 DE 102021129024
(71) Anmelder: Gustav Magenwirth GmbH & Co. KG, 72574 Bad Urach (DE)
(72) Erfinder: Ruopp, Michael, 89180 Berghülen (DE); Glück, Oskar, 72768 Reutlingen (DE); Beier, Jürgen, 89081 Ulm (DE)
(74) Vertreter: Hoeger, Stellrecht & Partner Patentanwälte mbB

(57) **Zusammenfassung**

Um eine Gebereinheit (100) zur Bereitstellung von druckbeaufschlagtem Hydraulikmedium umfassend einen einen Zylinderinnenraum (112) aufweisenden Gehäusekörper (114) und ein in dem Zylinderinnenraum beweglich gelagertes Plungerelement (138) zu verbessern, wird vorgeschlagen, dass eine zumindest teilweise durch zumindest einen Teil des Plungerelements begrenzte Druckkammer (142) für die Druckbeaufschlagung eines Hydraulikmediums in dem Zylinderinnenraum ausgebildet ist und wobei zumindest ein Dichtungselement (182, 188, 256) zum Abdichten der Druckkammer zwischen dem Plungerelement und dem Gehäusekörper bezogen auf eine Betätigungsbewegung des Plungerelements statisch relativ zum Gehäusekörper in dem Zylinderinnenraum angeordnet ist.

## Beschreibung

Die Erfindung betrifft eine Gebereinheit zur Bereitstellung von druckbeaufschlagtem Hydraulikmedium, insbesondere eine Gebereinheit für ein insbesondere lenkergeführtes Fahrzeug.

Der Erfindung liegt die Aufgabe zugrunde, eine Gebereinheit zu verbessern.

Bei Ausführungsformen der Erfindung wird diese Aufgabe erfindungsgemäß dadurch gelöst, dass die zur Bereitstellung von druckbeaufschlagtem Hydraulikmedium ausgebildete Gebereinheit einen einen Zylinderinnenraum aufweisenden Gehäusekörper und ein in dem Zylinderinnenraum beweglich gelagertes Plungerelement umfasst, wobei eine zumindest teilweise durch zumindest einen Teil des Plungerelements begrenzte Druckkammer für die Druckbeaufschlagung eines Hydraulikmediums in dem Zylinderinnenraum ausgebildet ist und wobei zumindest ein Dichtungselement, also insbesondere genau ein Dichtungselement oder mehrere Dichtungselemente, zum Abdichten der Druckkammer zwischen dem Plungerelement und dem Gehäusekörper bezogen auf eine Betätigungsbewegung des Plungerelements statisch relativ zum Gehäusekörper in dem Zylinderinnenraum angeordnet ist.

Insbesondere ist ein Vorteil der erfindungsgemäßen Lösung, dass das zumindest eine Dichtungselement durch die statische Abdichtung zum Gehäusekörper weniger stark beansprucht wird und ein Verschleiß desselben reduziert wird.

Beispielsweise kann bei vorteilhaften Ausführungsformen durch die statische Anordnung des zumindest einen Dichtungselements, insbesondere der statischen Anordnung von mehreren Dichtungselementen, eine erforderliche Bauhöhe des Zylinderinnenraums reduziert werden und eine kompaktere Ausgestaltung der Gebereinheit wird ermöglicht.

Insbesondere wird durch die Betätigungsbewegung des Plungerelements ein Hydraulikmedium in der Druckkammer unter Druck gesetzt.

Vorteilhafterweise ist das Plungerelement zwischen einem insbesondere mehrere Stellungen des Plungerelements aufweisenden druckbeaufschlagenden Zustand und einem insbesondere mehrere Stellungen des Plungerelements aufweisenden Grundzustand insbesondere linear in zu einer Zylinderachse axialen Richtung beweglich in dem Zylinderinnenraum gelagert.

Insbesondere wird dabei in dem druckbeaufschlagenden Zustand ein Hydraulikmedium in der Druckkammer durch das Plungerelement unter Druck gesetzt und druckbeaufschlagtes Hydraulikmedium durch die Gebereinheit bereitgestellt.

Insbesondere ist eine Plungerfeder vorgesehen, die das Plungerelement in Richtung des Grundzustands beaufschlagt.

Insbesondere umfasst das Plungerelement einen Gleitabschnitt, der in einem vorzugsweise durch den Gehäusekörper ausgebildeten Führungsabschnitt des Zylinderinnenraums geführt gelagert, insbesondere linear beweglich gelagert, ist.

Beispielsweise umfasst das Plungerelement einen insbesondere einstückigen Plungerkörper, welcher vorteilhafterweise den Gleitabschnitt aufweist.

Insbesondere begrenzt zumindest ein druckkammerseitiges Teil des Plungerkörpers die Druckkammer. Vorzugsweise weist der Plungerkörper, insbesondere dessen druckkammerseitiges Teil, einen Innenraum auf, welcher zumindest teilweise die Druckkammer ausbildet. Bei einer Betätigung des Plungerelements wird der Plungerkörper zur Verkleinerung der Druckkammer verschoben, wodurch das Hydraulikmedium in der Druckkammer unter Druck gesetzt wird.

Vorzugsweise weist der Plungerkörper, insbesondere von einem Betätigungsende bis zu einem druckkammerseitigen Ende desselben, eine zumindest im Wesentlichen zylindrische Außenseite auf und/oder eine zu einer Plungerachse zumindest im Wesentlichen konstante radiale Ausdehnung auf.

Grundsätzlich kann das Plungerelement aus unterschiedlichsten Werkstoffen ausgebildet sein.

Bei einigen günstigen Ausführungsformen ist zumindest der Plungerkörper, beispielsweise das gesamte Plungerelement aus Metall ausgebildet.

Bei vorteilhaften Ausführungsformen ist vorgesehen, dass zumindest der Plungerkörper des Plungerelements, vorzugsweise das gesamte Plungerelement, aus Kunststoff, insbesondere aus einem Duroplast, ausgebildet ist.

Insbesondere dichtet zumindest ein statisch angeordnetes Dichtungselement gegen den Plungerkörper ab und aus dem Kunststoff, insbesondere dem Duroplast, ist in günstiger Weise ein Plungerkörper mit einer guten Oberflächengüte ausbildbar, sodass durch den glatten Plungerkörper, welcher sich relativ zu dem an diesem abdichtenden Dichtungselement sich bewegt, das Dichtungselement nicht stark beansprucht wird.

Hinsichtlich dem zumindest einen Dichtungselement, also insbesondere genau einem Dichtungselement oder mehreren Dichtungselementen, wurden bislang keine näheren Angaben gemacht.

Insbesondere ist nachstehend unter der Formulierung, dass zumindest ein Dichtungselement ein Merkmal aufweist, zu verstehen, dass das genau eine Dichtungselement oder ein Dichtungselement von mehreren Dichtungselementen, vorzugsweise zumindest einige, beispielsweise sämtliche, der mehreren Dichtungselemente, dieses Merkmal aufweisen.

Vorzugsweise ist vorgesehen, dass zumindest einige, insbesondere sämtliche, der zwischen dem Plungerelement und dem Gehäusekörper abdichtenden Dichtungselementen bezogen auf die Betätigungsbewegung des Plungerelements statisch relativ zu dem Gehäusekörper in dem Zylinderinnenraum angeordnet sind.

Beispielsweise sind zumindest einige, insbesondere sämtliche, der die Drucckammer abdichtenden Dichtungselemente bezogen auf die Betätigungsbewegung des Plungerelements statisch relativ zu dem Gehäusekörper in dem Zylinderinnenraum angeordnet.

Insbesondere ist ein insbesondere von dem Gehäusekörper ausgebildeter Dichtungsabschnitt in dem Zylinderinnenraum ausgebildet, in welchem ein insbesondere statisch abdichtendes Dichtungselement oder mehrere insbesondere statisch abdichtende Dichtungselemente, welches/welche zwischen dem Plungerelement und dem Gehäusekörper abdichten, angeordnet ist/sind.

Vorzugsweise ist vorgesehen, dass zumindest ein relativ zum Gehäusekörper statisch angeordnetes Dichtungselement bezüglich einer insbesondere aus dem Gehäusekörper ausgebildeten Führungsfläche des Führungsabschnitts in einer zu einer Zylinderachse radialen Richtung zurückversetzt angeordnet ist.

Insbesondere ist so das zumindest eine Dichtungselement zur Zylinderachse radial weiter außen angeordnet als die Führungsfläche und ragt lediglich etwas in radialer Richtung über einen fortgesetzt gedachten Verlauf der Führungsfläche hinaus, um gegenüber dem Plungerelement, insbesondere dem Plungerkörper, abzudichten.

Vorzugsweise ist in dem Zylinderinnenraum zumindest eine axiale Festlegungsfläche, insbesondere zur positionsgetreuen Anlage, für zumindest ein insbesondere statisch angeordnetes Dichtungselement vorgesehen. Insbesondere ist das zumindest eine Dichtungselement angrenzend zu der Festlegungsfläche angeordnet und vorteilhafterweise begrenzt die Festlegungsfläche zumindest einseitig eine zur Zylinderachse axiale Positionsverschiebung des zumindest einen Dichtungselements, sodass dieses zumindest näherungsweise in Position gehalten wird.

Besonders günstig ist es, wenn zumindest ein insbesondere statisch angeordnetes Dichtungselement in zu der Zylinderachse axialen Richtung zwischen zwei axialen Festlegungsflächen angeordnet ist. Vorteilhafterweise wird das zumindest eine Dichtungselement zwischen den zwei axialen Festlegungsflächen gehalten.

Somit wird eine axiale Positionsverschiebung des zumindest einen Dichtungselements beidseitig beschränkt.

Insbesondere erstreckt sich der Dichtungsabschnitt zwischen den zwei axialen Festlegungsflächen.

Insbesondere begrenzt eine Zylinderwand des Gehäusekörpers den Zylinderinnenraum.

Bei einigen günstigen Ausführungsformen ist zumindest eine axiale Festlegungsfläche durch eine Stufe in der Zylinderwand des Gehäusekörpers ausgebildet.

Insbesondere ist diese Stufe zwischen dem Führungsabschnitt und dem Dichtungsabschnitt ausgebildet, wobei eine radiale Ausdehnung des Zylinderinnenraums im Bereich des Dichtungsabschnitts größer ist als im Bereich des Führungsabschnitts.

Bei einigen besonders vorteilhaften Ausführungsformen ist zumindest ein Sicherungselement für zumindest ein Dichtungselement, vorzugsweise für ein insbesondere positionsgetreues Halten des zumindest einen Dichtungselements, in dem Zylinderinnenraum angeordnet.

Vorzugsweise bildet das zumindest eine Sicherungselement zumindest eine axiale Festlegungsfläche aus.

Besonders günstig ist es, wenn das zumindest eine Sicherungselement zumindest einen Sicherungsring zum Festlegen einer Position zumindest eines vorzugsweise statisch angeordneten, insbesondere zwischen dem Plungerelement und dem Gehäusekörper abdichtenden Dichtungselements aufweist.

Besonders günstig ist es, wenn der zumindest eine Sicherungsring federbeaufschlagt ist.

Besonders vorteilhaft ist es, wenn der insbesondere federbeaufschlagte Sicherungsring des Sicherungselements an einem in dem Zylinderinnenraum ausgebildeten axialen Anschlag anliegt, wobei vorzugsweise durch die Federbeaufschlagung der Sicherungsring an den Anschlag angedrückt wird.

Vorteilhafterweise ist so eine Position des Sicherungsrings festgelegt und da die Beaufschlagung gegen den Anschlag drückt, wird eine axiale Beanspruchung des axial zu positionierenden Dichtungselements zumindest reduziert, insbesondere vermieden.

Beispielsweise wird der axiale Anschlag durch die Zylinderwand, insbesondere eine Stufe in derselben, ausgebildet.

Insbesondere ist vorgesehen, dass sich in dem Zylinderinnenraum an den Bereich des Dichtungsabschnitts in axialer Richtung die Druckkammer anschließt.

Vorzugsweise weist der Zylinderinnenraum im Bereich der Druckkammer eine größere radiale Ausdehnung auf als im Bereich des Dichtungsabschnitts.

Günstig ist es, wenn in dem Übergang von dem Dichtungsabschnitt zu der Druckkammer eine insbesondere von der Zylinderwand ausgebildete Stufe in dem Zylinderinnenraum vorgesehen ist.

Insbesondere bildet diese Stufe den axialen Anschlag für das Sicherungselement aus.

Insbesondere ist in dem Zylinderinnenraum zumindest ein eine die Drucckammer umfassende Hydraulikkammer zu einer Umgebung des Gehäusekörpers abdichtendes Dichtungselement angeordnet. Insbesondere dichtet dieses Dichtungselement zwischen dem Plungerelement und dem Gehäusekörper ab.

Insbesondere ist zumindest ein zwischen dem Gehäusekörper und dem Plungerelement die Druckkammer abdichtendes Dichtungselement in dem Zylinderinnenraum angeordnet.

Besonders vorteilhaft ist es, wenn zumindest eines der Dichtungselemente, insbesondere das die Druckkammer abdichtende Dichtungselement, eine Dichtlippe aufweist, wobei hierdurch vorzugsweise die Abdichtwirkung verbessert wird.

Vorzugsweise ist vorgesehen, dass die Dichtlippe des zumindest einen Dichtungselements an dem Plungerelement anliegt.

Besonders vorteilhaft ist es, wenn die Dichtlippe derart an dem Plungerelement angeordnet ist, dass in einem druckbeaufschlagenden Zustand das druckbeaufschlagte Hydraulikmedium die Dichtlippe an das Plungerelement anpresst.

Insbesondere ist das die Hydraulikkammer abdichtende Dichtungselement und/oder das die Druckkammer abdichtende Dichtungselement wie voranstehend, beispielsweise in dem Dichtungsabschnitt und/oder anliegend an zumindest eine Festlegungsfläche und/oder axial zwischen zwei Festlegungsflächen, in dem Zylinderinnenraum angeordnet.

Bei besonders vorteilhaften Ausführungsformen ist vorgesehen, dass in zur Zylinderachse axialer Richtung zwischen dem die Hydraulikkammer nach außen abdichtenden Dichtungselement und dem die Druckkammer abdichtenden Dichtungselement ein Distanzelement angeordnet ist.

Insbesondere wird hierdurch ein Festlegen der Position der Dichtungselemente verbessert.

Vorteilhafterweise kann so auch ein von der Druckkammer abgegrenzter Raum der Hydraulikkammer ausgebildet werden, in welchem ein mit einem Reservoirraum zur Bevorratung von Hydraulikmedium verbundener Ausgleichskanal einmünden kann, um Schwankungen in der Menge und/oder des Drucks des Hydraulikmediums in der Hydraulikkammer auszugleichen.

Besonders günstig ist es, wenn das Distanzelement zumindest eine Fluidführungsaussparung aufweist, welche insbesondere eine in zumindest einigen der zu dem Grundzustand korrespondierenden Stellungen des Plungerelementes ausgebildete fluidführende Verbindung zwischen einem Raumbereich der Hydraulikkammer, in welchen der Ausgleichskanal mündet, und der Druckkammer zumindest teilweise ausbildet.

Vorteilhafterweise wird die Fluidführungsaussparung zumindest teilweise durch einen Durchbruch oder mehrere Durchbrüche ausgebildet, der/die von einer der Zylinderwand zugewandten Seite des Distanzelements zu einer dem Plungerelement zugewandten Seite des Distanzelements verläuft/verlaufen. Vorzugsweise wird die Fluidführungsaussparung zumindest teilweise durch zumindest einen auf der dem Plungerelement zugewandten Seite zurückgesetzten, insbesondere einen relativ zu einem das Plungerelement kontaktierenden Abschnitt, zurückgesetzten Abschnitt ausgebildet.

Insbesondere erstreckt sich der zumindest eine zurückgesetzte Abschnitt entlang der axialen Erstreckung des Distanzelementes.

Vorteilhafterweise mündet zumindest ein Durchbruch in zumindest einen zurückgesetzten Abschnitt.

Insbesondere ist zumindest ein Durchbruch und/oder zumindest ein an dem zurückgesetzten Abschnitt ausgebildeter Hohlraum bei der ausgebildeten fluidführenden Verbindung mit Aussparungen an dem Plungerelement fluidführend verbunden.

Insbesondere weist die Fluidführungsaussparung an der der Zylinderwand zugewandten Seite des Distanzelementes zumindest einen zurückgesetzten Abschnitt auf, wobei insbesondere zumindest im Bereich dieses Abschnitts zwischen dem Distanzelement und der Zylinderwand ein Hohlraum ausgebildet ist, in welchen vorzugsweise zumindest ein Durchbruch und/oder eine Einlassöffnung eines Ausgleichskanals mündet/münden.

Vorzugsweise ist ein, insbesondere mit einem Reservoirraum verbundener, Ausgleichskanal vorgesehen, welcher an einer insbesondere in der Zylinderwand ausgebildeten, Mündungsöffnung in die Hydraulikkammer mündet.

Insbesondere ist die Mündungsöffnung bezogen auf eine axiale Richtung der Zylinderachse zwischen zwei zwischen dem Plungerelement und dem Gehäusekörper abdichtenden Dichtungselementen ausgebildet, vorteilhafterweise also zwischen dem die Hydraulikkammer nach außen abdichtenden Dichtungselement und dem die Druckkammer abdichtenden Dichtungselement.

Bei besonders günstigen Ausführungsformen weist das Plungerelement, beispielsweise an seinem druckkammerseitigen Teil, zumindest eine Aussparung auf, welche in zu dem Grundzustand korrespondierenden Stellungen des Plungerelements eine Fluidverbindung zwischen der Drucckammer und der Mündungsöffnung ausbildet und wobei diese Fluidverbindung in zu dem druckbeaufschlagenden Zustand korrespondierenden Stellungen des Plungerelements geschlossen ist.

Insbesondere erstreckt sich diese zumindest eine Aussparung an dem Plungerelement in zu dem Grundzustand korrespondierenden Stellungen des Plungerelements an dem die Druckkammer abdichtenden Dichtungselement vorbei.

Beispielsweise ist vorgesehen, dass das Teil des Plungerelements mit dieser zumindest einen Aussparung in zu dem druckbeaufschlagenden Zustand korrespondierenden Stellungen des Plungerelements zumindest im Wesentlichen vollständig in der Druckkammer angeordnet ist.

Alternativ oder ergänzend wird bei vorteilhaften Ausführungsformen der Erfindung die voranstehend genannte Aufgabe durch eine Gebereinheit zur Bereitstellung von druckbeaufschlagtem Hydraulikmedium gelöst, welche einen Gehäusekörper mit einem sich von einer Betätigungsöffnung bis zu einer Zylinderbodenöffnung durch den Gehäusekörper hindurch erstreckenden Zylinderinnenraum umfasst, wobei ein Zylinderbodenelement zumindest im Bereich der Zylinderbodenöffnung in dem Zylinderinnenraum insbesondere lösbar befestigt ist.

Beispielsweise wird hierdurch eine einfachere Fertigung der Gebereinheit ermöglicht.

Insbesondere ist eine Wartung von beispielsweise verschlissenen Teilen in dem Zylinderinnenraum durch die lösbare Befestigung des Zylinderbodenelements ermöglicht.

Beispielsweise ist bei diesen Ausführungsformen eines oder mehrere der voranstehend erläuterten Merkmale vorgesehen.

Vorteilhafterweise sind für die insbesondere lösbare Befestigung des Zylinderbodenelements Verschlusselemente und korrespondierende Verschlussaufnahmen, welche die Verschlusselemente in einem befestigten Zustand aufnehmen, vorgesehen. Insbesondere weist das Zylinderbodenelement die Verschlusselemente auf und sind die Verschlussaufnahmen in dem Gehäusekörper, insbesondere in dem Zylinderinnenraum ausgebildet.

Bei bevorzugten Ausführungsformen ist vorgesehen, dass durch eine Federbeaufschlagung das Zylinderbodenelement in einem in dem Zylinderinnenraum befestigten Zustand gehalten wird, insbesondere die Verschlusselemente in einer jeweiligen Verschlussaufnahme gehalten werden.

Besonders günstig ist es, wenn das Zylinderbodenelement mit einem Bajonettverschluss in der Zylinderbodenöffnung insbesondere lösbar im befestigten Zustand befestigt ist.

Insbesondere ist ein zwischen dem Zylinderbodenelement und dem Gehäusekörper abdichtendes Dichtungselement vorgesehen, welches vorteilhafterweise beispielsweise federbeaufschlagt insbesondere durch ein Sicherungselement positionsgetreu gehalten wird.

Besonders günstig ist es, wenn ein gleiches Sicherungselement das zwischen dem Zylinderbodenelement und dem Gehäusekörper abdichtende Dichtungselement und zumindest ein zwischen dem Plungerelement und dem Gehäusekörper abdichtendes Dichtungselement in ihren Positionen festlegt.

Beispielsweise weist hierfür das eine gleiche Sicherungselement zur Festlegung der Position je eines Dichtungselementes einen jeweiligen Sicherungsring auf, wobei die Sicherungsringe vorzugsweise durch ein federnd ausgebildetes Verbindungsteil des Sicherungselements verbunden sind.

Besonders günstig ist es, wenn zumindest ein Sicherungselement, insbesondere das Sicherungselement für das zwischen dem Plungerelement und dem Gehäusekörper abdichtende Dichtungselement und/oder für das zwischen dem Zylinderbodenelement und dem Gehäusekörper abdichtende Dichtungselement, zumindest einen insbesondere zur Plungerachse radial ausgebildeten Fluiddurchlass aufweist, um vorteilhafterweise einen radial innenliegenden Teil der Druckkammer mit einem radial außenliegenden Teil der Druckkammer, in welchen insbesondere eine Auslassöffnung mündet, fluidführend zu verbinden.

Alternativ oder ergänzend wird die eingangs genannte Aufgabe bei vorteilhaften Ausführungsformen der Erfindung auch dadurch gelöst, dass eine Gebereinheit zur Bereitstellung von druckbeaufschlagtem Hydraulikmedium ein Plungerelement und ein Zylinderbodenelement umfasst, wobei das Plungerelement und das Zylinderbodenelement durch eine Haltevorrichtung zu einer insbesondere vormontierbaren und vormontierten Einsatzbaugruppeneinheit zusammengehalten werden.

Insbesondere können so das Plungerelement und das Zylinderbodenelement vormontiert werden und durch das Zusammenhalten der Einsatzbaugruppeneinheit durch die Haltevorrichtung ist eine Automatisierung in der Fertigung der Gebereinheit ermöglicht.

Insbesondere ist die Einsatzbaugruppeneinheit als eine in dem Zylinderinnenraum vorgesehene Bauteile umfassende Komponente ausgebildet, welche als solche vormontiert werden kann und hierdurch die Fertigung vereinfacht wird, da lediglich die Einsatzbaugruppeneinheit als eine Komponente in den Zylinderinnenraum eingesetzt werden muss.

Besonders günstig ist es, wenn die Haltevorrichtung zumindest ein bodenseitiges Halteelement und zumindest ein plungerseitiges Halteelement umfasst.

Besonders günstig ist es, wenn das bodenseitige Halteelement und das plungerseitige Halteelement zusammen eine Schnappvorrichtung ausbilden.

Vorteilhafterweise ist vorgesehen, dass das bodenseitige Halteelement und das plungerseitige Halteelement miteinander verrastet sind.

Insbesondere wird hierdurch eine einfach zu montierende Befestigung erreicht.

Besonders vorteilhaft ist es, wenn die Haltevorrichtung das Plungerelement und das Zylinderbodenelement in einer Maximalstellung relativ zueinander hält und eine Relativbewegung der beiden Elemente über die Maximalstellung hinaus blockiert.

Insbesondere ist die Maximalstellung des Plungerelements relativ zu dem Zylinderbodenelement eine Stellung, in welcher diese beiden einen maximal zulässigen Abstand zueinander aufweisen.

Insbesondere lässt die Haltevorrichtung eine Relativbewegung beispielsweise in axialer Richtung zu einer Plungerachse zwischen dem Plungerelement und dem Zylinderbodenelement bis zu der Maximalstellung, also insbesondere solange die Elemente noch nicht den maximal zulässigen Abstand zueinander aufweisen, zu.

Vorteilhafterweise werden hierdurch das Plungerelement und das Zylinderbodenelement bei einer Vormontage in der Maximalstellung gehalten und in einem eingebauten Zustand in dem Zylinderinnenraum wird jedoch die Funktionsfähigkeit und Beweglichkeit des Plungerelements von der Haltevorrichtung nicht beeinträchtigt.

Beispielsweise wird durch die Haltevorrichtung auch eine Minimalstellung, in welcher das Zylinderbodenelement und das Plungerelement einen Minimalabstand zueinander aufweisen, definiert und vorzugsweise lässt die Haltevorrichtung die Bewegungen zwischen dem Plungerelement und dem Zylinderbodenelement zwischen der Minimalstellung und der Maximalstellung zu.

Vorzugsweise sind das bodenseitige Halteelement und das plungerseitige Halteelement relativ zueinander insbesondere linear beweglich gelagert, solange das Plungerelement und das Zylinderbodenelement einen geringeren Abstand als den maximal zulässigen Abstand einnehmen und die beiden Halteelemente wirken blockierend in der Maximalstellung zusammen.

Insbesondere ist ein durch die Maximalstellung definierter maximal zulässiger Abstand zwischen dem Plungerelement und dem Zylinderbodenelement größer als Abstände, welche das Plungerelement und das Zylinderbodenelement in einem in dem Zylinderinnenraum verbauten Zustand relativ zueinander einnehmen.

Vorzugsweise ist vorgesehen, dass das Plungerelement und das Zylinderbodenelement in die Maximalstellung vorgespannt sind.

Insbesondere umfasst die Haltevorrichtung eine vorzugsweise vorgespannte Feder, welche das Plungerelement in Richtung der Maximalstellung beaufschlagt.

Vorzugsweise ist die Feder in der Maximalstellung zwischen dem Plungerelement und dem Zylinderbodenelement vorgespannt.

Insbesondere ist dabei günstig, dass in der Einsatzbaugruppeneinheit das Plungerelement und das Zylinderbodenelement in der Maximalstellung vorgespannt aneinandergehalten werden und so die Einsatzbaugruppeneinheit eine hinreichende Stabilität für eine einfache Montage aufweist und beispielsweise eine automatisierte Fertigung ermöglicht wird.

Bei bevorzugten Ausführungsformen ist vorgesehen, dass die Feder der Haltevorrichtung in einen Innenraum des Plungerkörpers eingreift und insbesondere sich in dem Innenraum direkt oder indirekt an dem Plungerelement abstützt.

Insbesondere wird hierdurch eine kompakte Bauweise ermöglicht.

Beispielsweise ist das plungerseitige Halteelement in dem Innenraum des Plungerkörpers angeordnet.

Besonders vorteilhaft ist es, wenn die Feder der Haltevorrichtung das plungerseitige Halteelement in dem Innenraum des Plungerkörpers hält.

Bei vorteilhaften Ausführungsformen ist vorgesehen, dass die das Plungerelement in Richtung des Grundzustands beaufschlagende Plungerfeder auch die Feder der Haltevorrichtung ausbildet.

Besonders vorteilhaft ist es, wenn das Zylinderbodenelement eine zumindest ein druckkammerseitiges Teil des Plungerelements, insbesondere des Plungerkörpers, zumindest teilweise stabilisierend umgebende Fassung umfasst.

Beispielsweise umgreift die Fassung zumindest teilweise zumindest einen Teil des Plungerelements, insbesondere des Plungerkörpers, insbesondere ein dem Zylinderbodenelement zugewandtes Teil, wobei beispielsweise die Fassung das Teil an dem Teil anliegend oder vorzugsweise mit etwas Spiel umgreift. Vorteilhafterweise erhält hierdurch die Einsatzbaugruppeneinheit eine höhere Stabilität und beispielsweise wird das Risiko eines Verrutschens und/oder Verkippens des Plungerelements relativ zu dem Zylinderbodenelement zumindest reduziert.

Beispielsweise greift das Teil des Plungerelementes, welches von der Fassung stabilisierend umgeben wird, in einen Innenraum der Fassung ein.

Bei günstigen Ausführungsformen ist vorgesehen, dass die Fassung, insbesondere ein Wandabschnitt der Fassung, in zur Zylinderachse radialer Richtung von der Zylinderwand des Gehäusekörpers, insbesondere in dem eingebauten Zustand, beabstandet ist.

Insbesondere bildet ein Inneres der Fassung einen Teil der Druckkammer aus und vorzugsweise zusammen mit dem Innenraum des Plungerkörpers zumindest einen Großteil, günstigerweise zumindest die Hälfte, beispielsweise zumindest zwei Drittel, der Druckkammer aus.

Vorteilhafterweise weist die Fassung, insbesondere ein Wandabschnitt derselben, zumindest einen Fluiddurchgang, beispielsweise in Form zumindest einer Aussparung und/oder zumindest einer Nut, auf, durch welchen das die Druckkammer teilweise ausbildende Innere der Fassung auch bei einem zumindest teilweise eingreifenden Plungerkörper mit einem die Fassung umgebenden Teil der Druckkammer fluidführend verbunden wird.

Hinsichtlich weiterer Ausbildungen der Baugruppeneinheit wurden bislang keine näheren Angaben gemacht.

Insbesondere ist das Zylinderbodenelement, insbesondere wie voranstehend erläutert, in dem Zylinderinnenraum befestigbar, wobei insbesondere die Feder der Haltevorrichtung und/oder die Plungerfeder das Zylinderbodenelement in dem befestigten Zustand hält.

Insbesondere umfasst die Baugruppeneinheit zumindest ein Dichtungselement, insbesondere zum Abdichten der Hydraulikkammer, vorzugsweise zum Abdichten der Druckkammer.

Vorzugsweise umfasst die Baugruppeneinheit eines oder mehrere der Dichtungselemente zum Abdichten zwischen dem Zylinderbodenelement und dem Gehäusekörper und/oder zum Abdichten zwischen dem Plungerelement und dem Gehäusekörper, insbesondere der voranstehend erläuterten Dichtungselemente, vorzugsweise sämtliche vorgesehene Dichtungselemente.

Besonders günstig ist es, wenn die Einsatzbaugruppeneinheit das Sicherungselement umfasst.

Bei vorteilhaften Ausführungsformen ist vorgesehen, dass die Einsatzbaugruppeneinheit das Distanzelement umfasst.

Vorteilhafterweise wird hierdurch erreicht, dass die Einsatzbaugruppeneinheit zumindest die meisten, vorzugsweise sämtliche, in dem Zylinderinnenraum einzusetzende Bauteile umfasst und so diese zusammen zur Einsatzbaugruppeneinheit vormontiert werden können und lediglich eine Komponente in den Zylinderinnenraum einzubauen ist.

Hinsichtlich weiterer vorteilhafter Ausgestaltungen der Gebereinheit wurden bislang keine näheren Angaben gemacht.

Bei besonders günstigen Ausführungsformen ist vorgesehen, dass die Gebereinheit einen Ausgleichsbehälter mit einem Reservoirraum umfasst, wobei insbesondere der Reservoirraum zur Bevorratung von Hydraulikmedium vorgesehen ist und mit einem Ausgleichskanal mit der Hydraulikkammer in dem Zylinderinnenraum verbunden ist.

Vorzugsweise wird der Ausgleichsbehälter zumindest teilweise von dem Gehäusekörper, welcher beispielsweise eine den Reservoirraum zumindest teilweise ausbildende Reservoirausnehmung umfasst, ausgebildet.

Insbesondere umfasst der Ausgleichsbehälter ein Deckelelement, welches insbesondere zumindest den Reservoirraum zu seiner Umgebung hin schützend umgreift.

Insbesondere ist der Reservoirraum zwischen dem Gehäusekörper und dem Deckelelement ausgebildet.

Beispielsweise begrenzt ein vorzugsweise zumindest teilweise formflexibles Hüllenelement den Reservoirraum zumindest teilweise.

Insbesondere umgreift das Deckelelement das Hüllenelement, sodass dieses vorteilhafterweise zu einer Umgebung der Gebereinheit hin schützend umgeben ist.

Insbesondere wird das Hüllenelement von dem Deckelelement den Reservoirraum abdichtend an den Gehäusekörper angedrückt.

Besonders vorteilhaft ist es, wenn das Deckelelement des Ausgleichsbehälters zumindest teilweise durch das Zylinderbodenelement in einem geschlossenen Zustand des Ausgleichsbehälters gehalten wird.

Beispielsweise wird hierdurch eine stabile Fixierung des Deckelelements erreicht.

Bei günstigen Ausführungsformen ist vorgesehen, dass das Deckelelement zumindest einen Haltearm, vorzugsweise mehrere, beispielsweise zwei, Haltearme umfasst, welcher/welche zumindest in dem geschlossenen Zustand des Ausgleichsbehälters das Zylinderbodenelement, insbesondere dessen Verschlusselemente, zumindest teilweise umgreift/umgreifen.

Insbesondere ist hierfür vorgesehen, dass der Haltearm oder die Haltearme in eine jeweilige Verschlussaufnahme eingreift/eingreifen.

Insbesondere bildet zumindest ein Haltearm des Deckelelements zumindest teilweise eine Verschlusskammer für ein korrespondierendes Verschlusselement mit aus.

Insbesondere ist vorgesehen, dass die Verschlusselemente für das Befestigen des Zylinderbodenelements an dem Gehäusekörper auch das Deckelelement, insbesondere dessen Haltearme, zumindest in dem geschlossenen Zustand des Ausgleichsbehälters halten.

Besonders vorteilhaft ist es, wenn in dem geschlossenen Zustand des Ausgleichsbehälters das Deckelelement, insbesondere ein Hakenvorsprung zumindest eines Haltearms, eine Öffnungsbewegung des Zylinderbodenelements blockiert, wobei insbesondere mit der Öffnungsbewegung das Zylinderbodenelement aus der lösbaren Befestigung gelöst wird.

Bei vorteilhaften Ausführungsformen ist vorgesehen, dass zumindest ein Haltearm des Deckelelements, insbesondere dessen Hakenvorsprung, eine Aussparung aufweist, durch welche ein von dem Haltearm blockiertes Verschlusselement zum Lösen der Blockierung hindurchführbar ist.

Vorteilhafterweise ist die Aussparung an einer der Zylinderbodenseite abgewandten Seite des Haltearms ausgebildet.

Insbesondere wird durch die Federbeaufschlagung des Zylinderbodenelements dieses in dem blockierten Zustand gehalten und so vorteilhafterweise auch das Deckelelement in dem geschlossenen Zustand gesichert.

Vorzugsweise ist das Zylinderbodenelement entgegen seiner Federbeaufschlagung zu bewegen, um die Blockierung zu lösen, insbesondere um das blockierte Verschlusselement durch die Aussparung hindurchzuführen. Insbesondere ist vorgesehen, dass eine Auslassöffnung, insbesondere für das druckbeaufschlagte Hydraulikmedium, in den Zylinderinnenraum, insbesondere in die Druckkammer, mündet.

Beispielsweise ist die Auslassöffnung in der Zylinderwand ausgebildet.

Insbesondere ist die Auslassöffnung im axialen Bereich, insbesondere bezogen auf die Zylinderachse, in welchem das zumindest ein Dichtungselement in seiner Position festlegende Sicherungselement angeordnet ist, in der Zylinderwand ausgebildet.

Insbesondere ist die Auslassöffnung beispielsweise über einen Auslasskanal mit einem Druckanschluss der Gebereinheit verbunden, wobei die Gebereinheit über den Druckanschluss das druckbeaufschlagte Hydraulikmedium einem beispielsweise angeschlossenen Nehmer bereitstellt.

Insbesondere ist zumindest ein den Auslasskanal zumindest teilweise aufweisender Anschlussstutzen aus dem Gehäusekörper ausgebildet.

Vorzugsweise ist vorgesehen, dass der Druckanschluss und/oder der Anschlussstutzen so ausgebildet ist, dass dieser sich zumindest in einem ordnungsgemäß an einen Lenker eines lenkergeführten Fahrzeugs montierten Zustand der Gebereinheit zumindest näherungsweise parallel zu einer Lenkererstreckungsrichtung erstreckt.

Beispielsweise kann so eine Anschlussleitung platzsparend an den Druckanschluss angeschlossen werden.

Insbesondere ist die parallel erstreckende Ausbildung des Anschlussstutzens und/oder des Druckanschlusses durch die voranstehend erläuterte Ausbildung der Gebereinheit, insbesondere der Anordnung der Dichtungselemente und/oder der Ausbildung der Druckkammer, ermöglicht.

Der Gehäusekörper kann grundsätzlich aus unterschiedlichsten Werkstoffen ausgebildet sein.

Bei bevorzugten Ausführungsformen ist vorgesehen, dass der Gehäusekörper aus Kunststoff ausgebildet ist.

Insbesondere ist der Zylinderinnenraum von einer durch den Gehäusekörper ausgebildeten Zylinderwand begrenzt, insbesondere in zur Zylinderachse radialen Richtung begrenzt.

Insbesondere wird eine zur Zylinderachse bis zur Zylinderwand gemessene radiale Ausdehnung des Zylinderinnenraums entlang dessen axialer Erstreckung von der Betätigungsöffnung zu der Zylinderbodenöffnung insbesondere stufenweise größer.

Insbesondere umfasst die Gebereinheit eine Betätigungsvorrichtung zum Betätigen des Plungerelements.

Insbesondere greift ein Betätigungselement der Betätigungsvorrichtung zur Betätigung des Plungerelements durch die Betätigungsöffnung in den Zylinderinnenraum ein.

Insbesondere wird bei einer Betätigung des Plungerelements durch die Betätigungsvorrichtung, vorzugsweise durch eine Beaufschlagung mit dem Betätigungselement, das Plungerelement in Richtung des druckbeaufschlagten Zustands bewegt.

Insbesondere ist in der Betätigungsöffnung ein axialer Anschlag ausgebildet, welcher insbesondere das Plungerelement in dem Zylinderinnenraum hält, und wobei vorteilhafterweise das Plungerelement durch die Federbeaufschlagung in dem Grundzustand zumindest in einer Ausgangsstellung gegen den axialen Anschlag gedrückt wird.

Insbesondere wird durch den axialen Anschlag ein größtmöglicher Abstand zwischen dem Plungerelement und dem Zylinderbodenelement in dem verbauten Zustand definiert.

Vorzugsweise ist der größtmögliche Abstand kleiner als der durch die Haltevorrichtung definierte maximal zulässige Abstand.

Beispielsweise ist die Gebereinheit eine handbetätigte Gebereinheit.

Insbesondere umfasst dann die Betätigungsvorrichtung eine insbesondere einen Handgriff umfassende Hebelvorrichtung.

Insbesondere ist die Gebereinheit für ein Hydrauliksystem eines Fahrzeugs, insbesondere eines lenkergeführten Fahrzeugs vorgesehen.

Vorzugsweise umfasst die Gebereinheit eine Halterung zum Befestigen derselben an einem Lenker.

Beispielsweise umfasst die Halterung eine Klemmvorrichtung.

Insbesondere umfasst die Halterung ein Spangenelement, mit welchem als Gegenstück der Gehäusekörper an einem Lenker befestigbar ist.

Beispielsweise ist dabei vorgesehen, dass eine Außenseite des Zylinderbodenelements eine äußere Auflagefläche zur Anlage an den Lenker ausbildet.

Die der Erfindung zugrunde liegende Aufgabe wird auch durch ein Fahrzeug, insbesondere ein lenkergeführtes Fahrzeug, gelöst, welches ein Hydrauliksystem mit einer Gebereinheit umfasst, wobei die Gebereinheit eines oder vorzugsweise mehrere der voranstehend erläuterten Merkmale aufweist. Insbesondere ist voranstehend und nachstehend unter der Formulierung zumindest im Wesentlichen im Zusammenhang mit einer Angabe zu verstehen, dass technisch bedingte und/oder technisch irrelevante Abweichungen von der Angabe mitumfasst sind.

Die vorstehende Beschreibung erfindungsgemäßer Lösungen umfasst somit insbesondere die durch die nachfolgenden durchnummerierten Ausführungsformen definierten verschiedenen Merkmalskombinationen:
1. Gebereinheit (100) zur Bereitstellung von druckbeaufschlagtem Hydraulikmedium umfassend einen einen Zylinderinnenraum (112) aufweisenden Gehäusekörper (114) und ein in dem Zylinderinnenraum (112) beweglich gelagertes Plungerelement (138), wobei eine zumindest teilweise durch zumindest einen Teil des Plungerelements (138) begrenzte Druckkammer (142) für die Druckbeaufschlagung eines Hydraulikmediums in dem Zylinderinnenraum (112) ausgebildet ist und wobei zumindest ein Dichtungselement (182, 188, 256) zum Abdichten der Druckkammer (142) zwischen dem Plungerelement (138) und dem Gehäusekörper (114) bezogen auf eine Betätigungsbewegung des Plungerelements (138) statisch relativ zum Gehäusekörper (114) in dem Zylinderinnenraum (112) angeordnet ist.
2. Gebereinheit (100) nach Ausführungsform 1, wobei das Plungerelement (138) zwischen einem insbesondere mehrere Stellungen des Plungerelements (138) aufweisenden druckbeaufschlagenden Zustand und einem insbesondere mehrere Stellungen des Plungerelements (138) aufweisenden Grundzustand insbesondere linear zu einer Zylinderachse (122) beweglich in dem Zylinderinnenraum (112) gelagert ist.
3. Gebereinheit (100) nach einer der voranstehenden Ausführungsformen, wobei ein Gleitabschnitt (154) des Plungerelements (138), insbesondere eines Plungerkörpers (152), in einem vorzugsweise durch den Gehäusekörper (114) ausgebildeten Führungsabschnitt (146) des Zylinderinnenraums (112) geführt gelagert ist.
4. Gebereinheit (100) nach einer der voranstehenden Ausführungsformen, wobei zumindest der Plungerkörper (152) des Plungerelements (138) aus Kunststoff, insbesondere aus einem Duroplast, ausgebildet ist.
5. Gebereinheit (100) nach einer der voranstehenden Ausführungsformen, wobei zumindest einige, insbesondere sämtliche, der zwischen dem Plungerelement (138) und dem Gehäusekörper (114) abdichtenden Dichtungselemente (182, 188) bezogen auf die Betätigungsbewegung des Plungerelements (138) statisch relativ zum Gehäusekörper (114) in dem Zylinderinnenraum (112) angeordnet sind.
6. Gebereinheit (100) nach einer der voranstehenden Ausführungsformen, wobei zumindest ein relativ zum Gehäusekörper (114) statisch angeordnetes Dichtungselement (182, 188, 256) bezüglich einer Führungsfläche (148) des Führungsabschnitts (146) in einer zu einer Zylinderachse (122) radialen Richtung zurückversetzt angeordnet ist.
7. Gebereinheit (100) nach einer der voranstehenden Ausführungsformen, wobei in dem Zylinderinnenraum (112) zumindest eine axiale Festlegungsfläche (176, 235) zur insbesondere positionsgetreuen Anlage für zumindest ein Dichtungselement (182, 188, 256) vorgesehen ist.
8. Gebereinheit (100) nach einer der voranstehenden Ausführungsformen, wobei zumindest ein Dichtungselement (182, 188, 256) in zu der Zylinderachse (122) axialen Richtung zwischen zwei Festlegungsflächen (176, 235) angeordnet ist, insbesondere zwischen diesen gehalten wird.
9. Gebereinheit (100) nach einer der voranstehenden Ausführungsformen, wobei zumindest eine axiale Festlegungsfläche (176, 235) durch eine Stufe (174) in einer Zylinderwand (128) des Gehäusekörpers (114) ausgebildet ist.
10. Gebereinheit (100) nach einer der voranstehenden Ausführungsformen, wobei zumindest ein Sicherungselement (234) für ein insbesondere positionsgetreues Halten zumindest eines Dichtungselements (182, 188, 256) in dem Zylinderinnenraum (112) angeordnet ist, wobei das zumindest eine Sicherungselement (234) zumindest eine axiale Festlegungsfläche (176, 235) ausbildet.
11. Gebereinheit (100) nach einer der voranstehenden Ausführungsformen, wobei das zumindest eine Sicherungselement (234) zumindest einen Sicherungsring (232, 262) zum Festlegen einer Position zumindest eines Dichtungselementes (182, 188, 256) aufweist, wobei insbesondere der zumindest eine Sicherungsring (232, 262) federbeaufschlagt ist.
12. Gebereinheit (100) nach einer der voranstehenden Ausführungsformen, wobei der insbesondere federbeaufschlagte Sicherungsring (232, 262) des Sicherungselements (234) an einem in dem Zylinderinnenraum (112) ausgebildeten axialen Anschlag (236) anliegt.
13. Gebereinheit (100) nach einer der voranstehenden Ausführungsformen, wobei zumindest ein eine die Druckkammer (142) umfassende Hydraulickammer (184) zu einer Umgebung des Gehäusekörpers (114), insbesondere zwischen dem Plungerelement (138) und dem Gehäusekörper (114), abdichtendes Dichtungselement (182) in dem Zylinderinnenraum (112) angeordnet ist.
14. Gebereinheit (100) nach einer der voranstehenden Ausführungsformen, wobei zumindest ein zwischen dem Gehäusekörper (114) und dem Plungerelement (138) die Druckkammer (142) abdichtendes Dichtungselement (188) in dem Zylinderinnenraum (112) angeordnet ist.
15. Gebereinheit (100) nach einer der voranstehenden Ausführungsformen, wobei zumindest das die Druckkammer (142) abdichtende Dichtungselement (188) eine insbesondere an dem Plungerelement (138) anliegende Dichtlippe (192) aufweist.
16. Gebereinheit (100) nach einer der voranstehenden Ausführungsformen, wobei in zur Zylinderachse (122) axialer Richtung zwischen dem die Hydraulickammer (184) nach außen abdichtendes Dichtungselement (182) und dem die Druckkammer (142) abdichtendes Dichtungselement (188) ein Distanzelement (212) angeordnet ist.
17. Gebereinheit (100) nach einer der voranstehenden Ausführungsformen, wobei das Distanzelement (212) zumindest eine Fluidführungsaussparung aufweist und insbesondere die Fluidführungsaussparung eine in zumindest einigen der zu dem Grundzustand korrespondierenden Stellungen des Plungerelementes ausgebildete fluidführende Verbindung zwischen einem Raumbereich der Hydraulikkammer (184), in welchen ein Ausgleichskanal (434) mündet, und der Druckkammer (142) zumindest teilweise ausbildet.
18. Gebereinheit (100) nach einer der voranstehenden Ausführungsformen, wobei die Fluidführungsaussparung durch zumindest einen Durchbruch (444), der von einer der Zylinderwand (128) zugewandten Seite des Distanzelements (212) zu einer dem Plungerelement (138) zugewandten Seite des Distanzelements (212) verläuft, und/oder zumindest einen auf der dem Plungerelement (138) zugewandten Seite zurückgesetzten, insbesondere relativ zu einem das Plungerelement (138) kontaktierenden Abschnitt zurückgesetzten, Abschnitt (446) ausgebildet wird und insbesondere sich zumindest ein Durchbruch (444) in einen zurückgesetzten Abschnitt (446) öffnet.
19. Gebereinheit (100) nach einer der voranstehenden Ausführungsformen, wobei ein insbesondere mit einem Reservoirraum (436) verbundener, Ausgleichskanal (434) an einer Mündungsöffnung (432) in eine Hydraulickammer (184) mündet, wobei insbesondere die Mündungsöffnung (432) bezogen auf eine axiale Richtung der Zylinderachse (122) zwischen zwei zwischen dem Plungerelement (138) und dem Gehäusekörper (114) abdichtenden Dichtungselementen (182, 188) ausgebildet ist.
20. Gebereinheit (100) nach einer der voranstehenden Ausführungsformen, wobei das Plungerelement (138), insbesondere an seinem druckkammerseitigen Teil, zumindest eine Aussparung aufweist, welche in zu dem Grundzustand korrespondierenden Stellungen des Plungerelements (138) eine Fluidverbindung zwischen der Druckkammer (142) und der Mündungsöffnung (432) ausbildet, und wobei diese Fluidverbindung in zu dem druckbeaufschlagenden Zustand korrespondierenden Stellungen des Plungerelements (138) geschlossen ist.
21. Gebereinheit (100) zur Bereitstellung von druckbeaufschlagtem Hydraulikmedium, insbesondere nach einer der voranstehenden Ausführungsformen, umfassend einen Gehäusekörper (114) mit einem sich von einer Betätigungsöffnung (124) bis zu einer Zylinderbodenöffnung (134) durch den Gehäusekörper (114) hindurch erstreckenden Zylinderinnenraum (112), wobei ein Zylinderbodenelement (252) zumindest im Bereich der Zylinderbodenöffnung (134) in dem Zylinderinnenraum (112) insbesondere lösbar befestigt ist.
22. Gebereinheit (100) nach einer der voranstehenden Ausführungsformen, wobei durch eine Federbeaufschlagung das Zylinderbodenelement (252) in einem in dem Zylinderinnenraum befestigten Zustand gehalten wird.
23. Gebereinheit (100) nach einer der voranstehenden Ausführungsformen, wobei das Zylinderbodenelement (252) mit einem Bajonettverschluss in der Zylinderbodenöffnung (134) insbesondere lösbar befestigt ist.
24. Gebereinheit (100) nach einer der voranstehenden Ausführungsformen, wobei ein gleiches Sicherungselement (234) ein zwischen dem Zylinderbodenelement (252) und dem Gehäusekörper (114) abdichtendes Dichtungselement (256) und zumindest ein zwischen dem Plungerelement (138) und dem Gehäusekörper (114) abdichtendes Dichtungselement (182, 188) in ihren Positionen festlegt.
25. Gebereinheit (100) zur Bereitstellung von druckbeaufschlagtem Hydraulikmedium, insbesondere nach einer der voranstehenden Ausführungsformen, umfassend ein Plungerelement (138) und ein Zylinderbodenelement (252), welche durch eine Haltevorrichtung (310) zu einer Einsatzbaugruppeneinheit (140) zusammengehalten werden.
26. Gebereinheit (100) nach einer der voranstehenden Ausführungsformen, wobei die Haltevorrichtung (310) ein bodenseitiges Halteelement (314) und ein plungerseitiges Halteelement (312) umfasst.
27. Gebereinheit (100) nach einer der voranstehenden Ausführungsformen, wobei das bodenseitige Halteelement (314) und das plungerseitige Halteelement (312) zusammen eine Schnappvorrichtung ausbilden und/oder miteinander verrastet sind.
28. Gebereinheit (100) nach einer der voranstehenden Ausführungsformen, wobei die Haltevorrichtung (310) das Plungerelement (138) und das Zylinderbodenelement (252) in einer Maximalstellung relativ zueinander hält und eine Relativbewegung der beiden Elemente (138, 252) über die Maximalstellung hinaus blockiert.
29. Gebereinheit (100) nach einer der voranstehenden Ausführungsformen, wobei ein durch die Maximalstellung definierter Maximalabstand zwischen dem Plungerelement (138) und dem Zylinderbodenelement (252) größer ist als Abstände, die das Plungerelement (138) und das Zylinderbodenelement (252) in einem in den Zylinderinnenraum (112) verbauten Zustand relativ zueinander einnehmen.
30. Gebereinheit (100) nach einer der voranstehenden Ausführungsformen, wobei die Haltevorrichtung (310) eine vorgespannte Feder (362) umfasst, welche das Plungerelement (138) in Richtung der Maximalstellung beaufschlagt.
31. Gebereinheit (100) nach einer der voranstehenden Ausführungsformen, wobei die Feder (362) der Haltevorrichtung (310) in einen Innenraum (342) des Plungerkörpers (152) eingreift und insbesondere in dem Innenraum (342) das plungerseitige Halteelement (312) hält.
32. Gebereinheit (100) nach einer der voranstehenden Ausführungsformen, wobei eine das Plungerelement (138) in Richtung des Grundzustands beaufschlagende Plungerfeder (552) auch die Feder (362) der Haltevorrichtung (310) ausbildet.
33. Gebereinheit (100) nach einer der voranstehenden Ausführungsformen, wobei das Zylinderbodenelement (252) eine zumindest ein drucckammerseitiges Teil des Plungerelements (138) zumindest teilweise stabilisierend umgebende Fassung (372) umfasst.
34. Gebereinheit (100) nach einer der voranstehenden Ausführungsformen, wobei die Fassung (372), insbesondere ein Wandabschnitt (374) der Fassung (372), in zur Zylinderachse (122) radialer Richtung von der Zylinderwand (374) beabstandet ist.
35. Gebereinheit (100) nach einer der voranstehenden Ausführungsformen, wobei die Baugruppeneinheit (140) zumindest ein Dichtungselement (182, 188, 256), insbesondere zumindest ein Dichtungselement (256) zum Abdichten zwischen dem Zylinderbodenelement (252) und dem Gehäusekörper (114) und/oder zumindest ein Dichtungselement (182, 188) zum Abdichten zwischen dem Plungerelement (138) und dem Gehäusekörper (114), umfasst.
36. Gebereinheit (100) nach einer der voranstehenden Ausführungsformen, wobei die Einsatzbaugruppeneinheit (140) das Sicherungselement (234) und/oder das Distanzelement (212) umfasst.
37. Gebereinheit (100) nach einer der voranstehenden Ausführungsformen, wobei diese einen Ausgleichsbehälter (438) mit einem Reservoirraum (436) umfasst, und dass insbesondere der Ausgleichsbehälter (438) zumindest teilweise von dem Gehäusekörper (114) ausgebildet wird.
38. Gebereinheit (100) nach einer der voranstehenden Ausführungsformen, wobei der Ausgleichsbehälter (438) ein Deckelelement (472) umfasst, wobei das Deckelelement (472) zumindest teilweise durch das Zylinderbodenelement (252) in einem geschlossenen Zustand des Ausgleichsbehälters (438) gehalten wird.
39. Gebereinheit (100) nach einer der voranstehenden Ausführungsformen, wobei das Deckelelement (472) zumindest einen Haltearm (522), insbesondere zwei Haltearme (522), umfasst, welcher/welche zumindest in dem geschlossenen Zustand des Ausgleichsbehälters (438) das Zylinderbodenelement (252) zumindest teilweise umgreift/umgreifen.
40. Gebereinheit (100) nach einer der voranstehenden Ausführungsformen, wobei in dem geschlossenen Zustand des Ausgleichsbehälters (438) das Deckelelement (472), insbesondere zumindest ein Hakenvorsprung (528) zumindest eines Haltearms (522), eine Öffnungsbewegung des Zylinderbodenelements (252) blockiert.
41. Gebereinheit (100) nach einer der voranstehenden Ausführungsformen, wobei zumindest ein Haltearm (522), insbesondere dessen Hakenvorsprung (528), eine Aussparung (534) aufweist, durch welche ein von dem Haltearm (522) blockiertes Verschlusselement (272) zum Lösen der Blockierung hindurchführbar ist.
42. Gebereinheit (100) nach einer der voranstehenden Ausführungsformen, wobei eine insbesondere in der Zylinderwand (374) ausgebildete Auslassöffnung (412) in den Zylinderinnenraum (112), insbesondere die Drucckammer (142), mündet.
43. Gebereinheit (100) nach einer der voranstehenden Ausführungsformen, wobei die Auslassöffnung (412) im axialen Bereich, in welchem das zumindest ein Dichtungselement in seiner Position festlegende Sicherungselement (234) angeordnet ist, in der Zylinderwand (128) ausgebildet ist.
44. Gebereinheit (100) nach einer der voranstehenden Ausführungsformen, wobei ein zumindest ein von dem Gehäusekörper (114) ausgebildeter Anschlussstutzen (418) und/oder ein Druckanschluss (416) der Gebereinheit (100) so ausgebildet ist, dass dieser sich zumindest in einem ordnungsgemäß an einen Lenker eines lenkergeführten Fahrzeugs montierten Zustand der Gebereinheit (100) zumindest näherungsweise parallel zu einer Lenkererstreckungsrichtung erstreckt.
45. Gebereinheit (100) nach einer der voranstehenden Ausführungsformen, wobei der Gehäusekörper (114) aus Kunststoff ausgebildet ist.
46. Gebereinheit (100) nach einer der voranstehenden Ausführungsformen, wobei ein Betätigungselement (574) einer Betätigungsvorrichtung (572) zur Betätigung des Plungerelements (138) durch die Betätigungsöffnung (124) in den Zylinderinnenraum (112) eingreift.
47. Gebereinheit (100) nach einer der voranstehenden Ausführungsformen, wobei ein axialer Anschlag (562) für das Plungerelement (138) in oder an der Betätigungsöffnung (124) ausgebildet ist.
48. Gebereinheit (100) nach einer der voranstehenden Ausführungsformen, wobei diese eine handbetätigte Gebereinheit (100) ist.
49. Gebereinheit (100) nach einer der voranstehenden Ausführungsformen, wobei diese eine Halterung (592) zum Befestigen derselben an einem Lenker aufweist, wobei insbesondere eine Außenseite des Zylinderbodenelements (252) eine äußere Auflagefläche (599) zur Anlage an den Lenker ausbildet.
50. Fahrzeug, insbesondere lenkergeführtes Fahrzeug, umfassend ein Hydrauliksystem mit einer Gebereinheit (100) nach einer der voranstehenden Ausführungsformen.

Bevorzugte Merkmale und Vorteile der Erfindung sind Gegenstand der nachfolgenden detaillierten Beschreibung und zeichnerischen Darstellung eines Ausführungsbeispiels.

In der Zeichnung zeigen:
- Fig. 1: eine an einem Lenker eines lenkergeführten Fahrzeugs montierte Gebereinheit des Ausführungsbeispiels;
- Fig. 2: eine Explosionsdarstellung der Gebereinheit;
- Fig. 3: eine Schnittdarstellung eines Gehäusekörpers der Gebereinheit;
- Fig. 4: eine teilweise Explosionsdarstellung einer Einsatzbaugruppeneinheit der Gebereinheit;
- Fig. 5: eine Schnittdarstellung der Gebereinheit, wobei ein Plungerelement in einem Grundzustand angeordnet ist;
- Fig. 6: eine Schnittdarstellung ähnlich wie Fig. 5, wobei jedoch das Plungerelement in einem druckbeaufschlagenden Zustand angeordnet ist;
- Fig. 7: eine ausschnittsweise vergrößerte Darstellung der Fig. 5 im Bereich von Dichtungselementen;
- Fig. 8: eine Darstellung eines Verschlusses für ein Zylinderbodenelement und einer Befestigung für ein Deckelelement eines Ausgleichsbehälters der Gebereinheit;
- Fig. 9: eine teilweise Explosionsdarstellung der Gebereinheit mit Blick auf eine Zylinderbodenseite derselben;
- Fig. 10: eine Schnittdarstellung im Bereich von das Zylinderbodenelement umgreifenden Haltearmen des Deckelelements und
- Fig. 11: eine Schnittdarstellung ähnlich wie in Fig. 5 zur Darstellung der Einsatzbaugruppeneinheit in den Zylinderinnenraum der Gebereinheit.

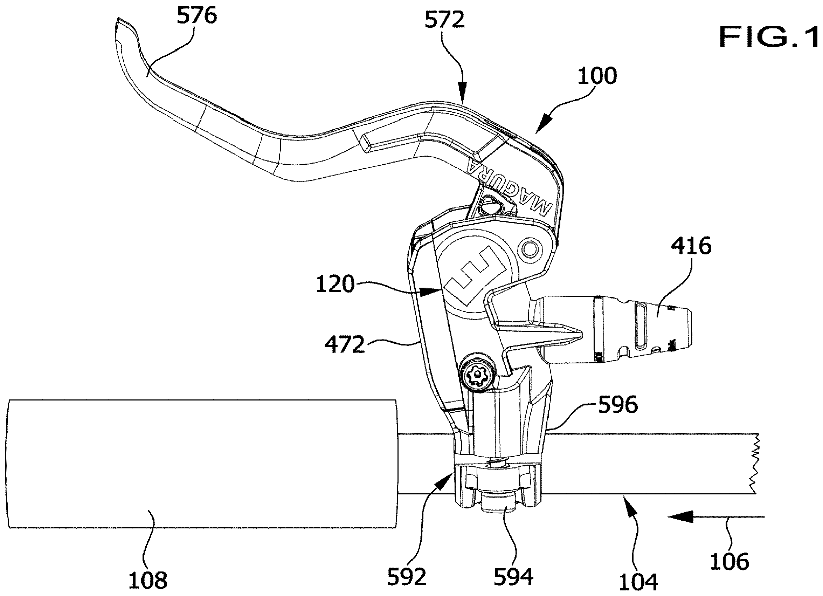

Ein Ausführungsbeispiel einer im Ganzen mit 100 bezeichneten Gebereinheit zur Bereitstellung von druckbeaufschlagtem Hydraulikmedium ist beispielsweise für ein Hydrauliksystem eines lenkergeführten Fahrzeugs ausgebildet und beispielhaft an einem Lenker 104 des Fahrzeugs in Fig. 1 dargestellt.

Insbesondere erstreckt sich der Lenker 104 in einer Lenkererstreckungsrichtung 106 bis zu einem Lenkergriff 108.

Die Gebereinheit stellt bei Betätigung derselben druckbeaufschlagtes Hydraulikmedium bereit, welches über eine Hydraulikleitung des Hydrauliksystems zu einem hydraulisch aktivierbaren Nehmer des Hydrauliksystems, insbesondre eine hydraulische Bremsvorrichtung oder beispielsweise in Varianten eine hydraulische Kupplungsvorrichtung, gelangt und diesen aktiviert.

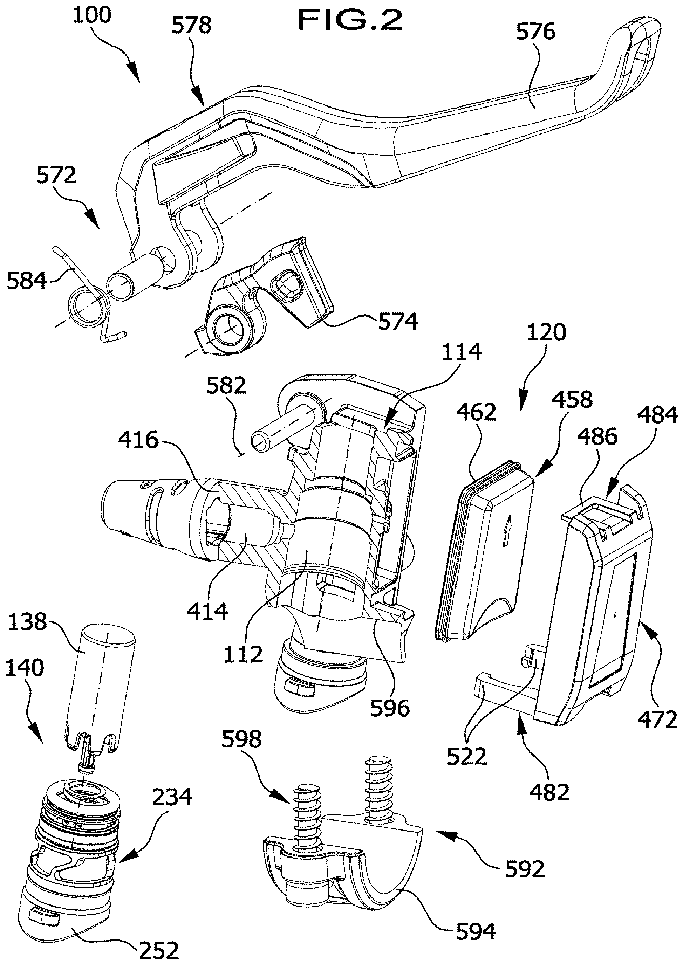

Das in Fig. 2 beispielhaft zerlegt dargestellte Ausführungsbeispiel der Gebereinheit 100 umfasst einen einen Zylinderinnenraum 112 aufweisenden Gehäusekörper 114 eines im Ganzen mit 120 bezeichneten Gehäuses.

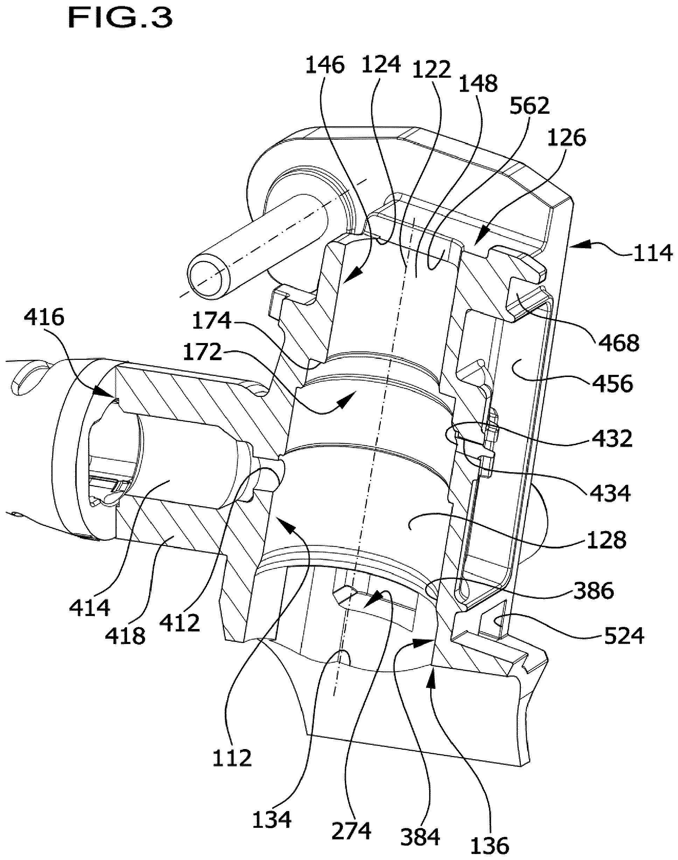

Der von einer Zylinderwand 128 begrenzte Zylinderinnenraum 112 erstreckt sich entlang einer Zylinderachse 122 zwischen einer Betätigungsöffnung 124 an einer Betätigungsseite 126 des Gehäusekörpers 114 und einer Zylinderbodenöffnung 134 an einer Zylinderbodenseite 136 des Gehäusekörpers 114, wie beispielhaft in Fig. 3 dargestellt ist.

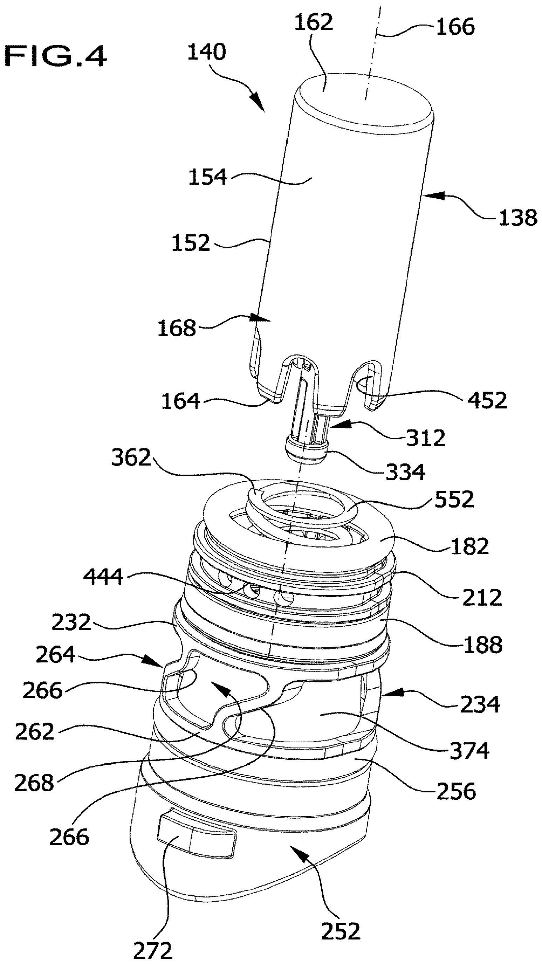

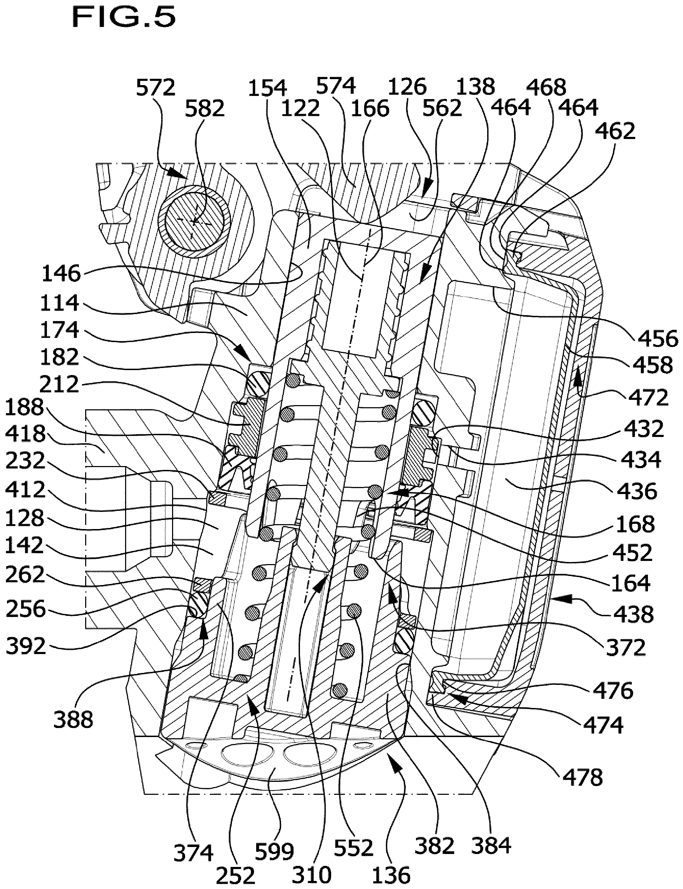

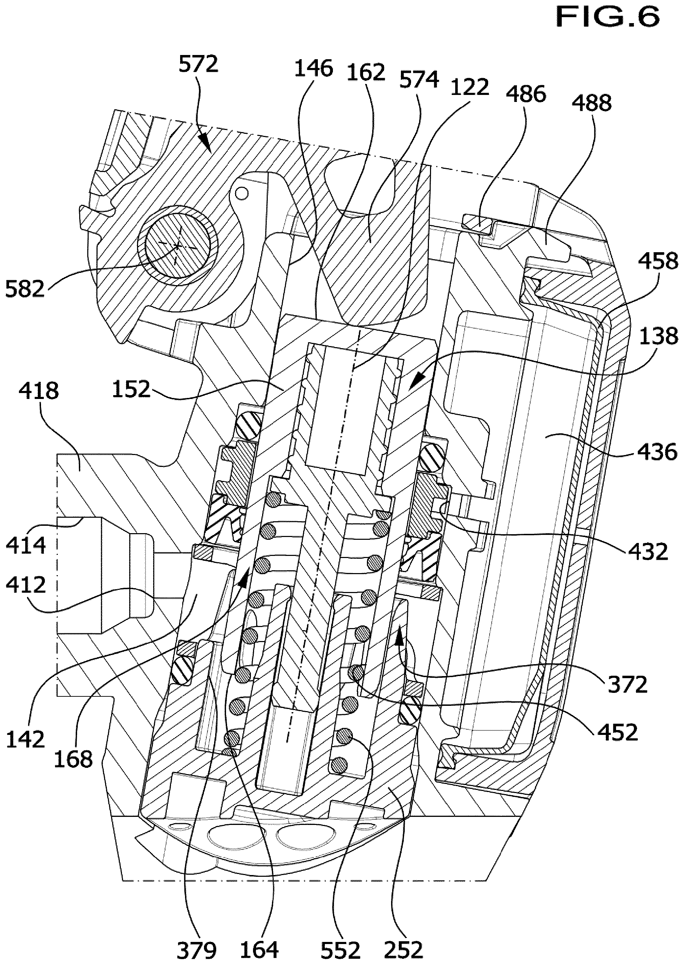

In dem Zylinderinnenraum 112 ist ein Plungerelement 138, welches insbesondere Teil einer beispielhaft in Fig. 4 dargestellten und im Ganzen mit 140 bezeichneten Einsatzbaugruppeneinheit ist, angeordnet, wobei der Gehäusekörper 114 und das Plungerelement 138 eine Druckkammer 142, zur Druckbeaufschlagung von einem Hydraulikmedium in dem Zylinderinnenraum 112 ausbilden, wie beispielhaft in Fig. 5 für einen nicht betätigten Grundzustand und in Fig. 6 für einen bei Betätigung der Gebereinheit 100 realisierten druckbeaufschlagenden Zustand dargestellt ist.

In dem Zylinderinnenraum 112 ist ein von der Betätigungsöffnung 154 ausgehender Führungsabschnitt 146 mit einer insbesondere zur Zylinderachse 122 im Wesentlichen zylindrischen Führungsfläche 148 der Zylinderwand 128 ausgebildet und ein Plungerkörper 152 des Plungerelements 138 ist mit einem im Wesentlichen zylindrischen Gleitabschnitt 154 für eine linear bewegliche Lagerung des Plungerelements 138 in dem Zylinderinnenraum 112 in dem Führungsabschnitt 146 angeordnet.

Der insbesondere einstückig ausgebildete Plungerkörper 152 erstreckt sich länglich von einem Betätigungsende 162 bis zu einem druckkammerseitigen Ende 164, wobei der Gleitabschnitt 154 von dem Betätigungsende 162 ausgehend ausgebildet ist.

Ein das druckkammerseitige Ende 164 umfassende druckkammerseitige Teil 168 des Plungerkörpers 152 begrenzt die Druckkammer 142, wobei vorzugsweise dieses Teil 168 einen Innenraum aufweist, in welchem die Druckkammer 142 teilweise ausgebildet ist.

Insbesondere hat der Plungerkörper 152 eine im Wesentlichen zylindrische Außenform, sodass eine maximale radiale Ausdehnung des Plungerkörpers 152 zu einer Plungerachse 166 des Plungerelements 138 im Wesentlichen von dem Betätigungsende 162 bis zu dem druckkammerseitigen Ende 164 zumindest im Wesentlichen konstant ist und vorzugsweise der Plungerkörper 152 eine zur Plungerachse 166 im Wesentlichen zylindrische Außenfläche aufweist.

In einem zusammengebauten Zustand fällt die Plungerachse 166 mit der Zylinderachse 122 zumindest im Wesentlichen zusammen.

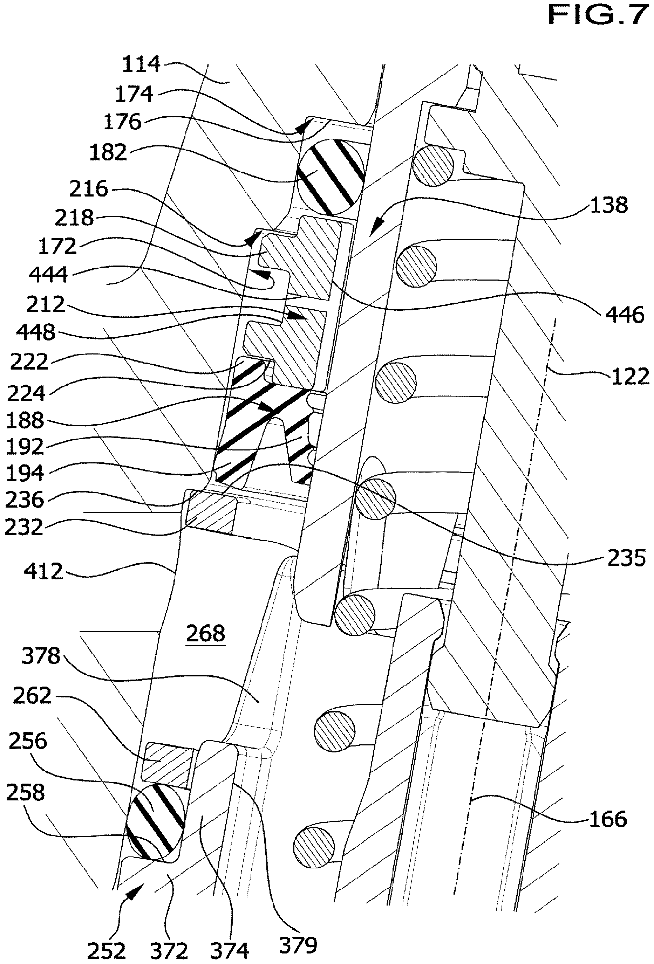

An dem der Betätigungsseite 126 gegenüberliegenden Ende des Führungsabschnitts 146 geht der Zylinderinnenraum 112 in einen beispielhaft in Fig. 7 vergrößert dargestellten Dichtungsabschnitt 172 über, welcher bezogen auf die Zylinderachse 122 eine größere radiale Ausdehnung als der Führungsabschnitt 146 aufweist. Insbesondere ist zwischen dem Führungsabschnitt 146 und dem Dichtungsabschnitt 172 eine Abdichtungsstufe 174 ausgebildet.

Ein Hydraulikkammerdichtungselement 182 liegt vorzugsweise an der Abdichtungsstufe 174 an und ist insbesondere durch eine von der Abdichtungsstufe 174 ausgebildeten Festlegungsfläche 176, deren Normale zumindest näherungsweise axial zur Zylinderachse 152 orientiert ist, in der Position festgelegt, und dichtet eine die Druckkammer 142 umfassende Hydraulikkammer 184 in dem Zylinderinnenraum 112 zwischen dem Gehäusekörper 114 und dem Plungerelement 138 ab.

Insbesondere ist in dem Dichtungsabschnitt 172, vorzugsweise an einem der Abdichtungsstufe 174 zur Zylinderachse 122 axial gegenüberliegenden Ende des Dichtungsabschnitts 172, ein Druckkammerdichtungselement 188 angeordnet, welches die Druckkammer 142 zwischen dem Gehäusekörper 114 und dem Plungerelement 138, insbesondere dem druckkammerseitigen Teil 168 des Plungerkörpers 152, abdichtet.

Vorteilhafterweise umfasst das Druckkammerdichtungselement 188 eine an dem Plungerelement 138 anliegende Dichtlippe 192. Insbesondere ragt die Dichtlippe 192 von einem wandseitigen Dichtabschnitt 194 des Druckkammerdichtungselements 188, welcher an der Zylinderwand 128 im Bereich des Dichtungsabschnitts 172 dichtend anliegt, hinweg ragt, sodass zwischen dem wandseitigen Dichtabschnitt 194 und der Dichtlippe 192 eine in die Druckkammer 142 hinein sich öffnende Aussparung in dem Druckkammerdichtungselement 188 ausgebildet ist, in welche druckbeaufschlagtes Hydraulikmedium der Druckkammer 142 eindringen und die Dichtlippe 192 an das Plungerelement 138 andrücken kann.

Vorteilhafterweise ist zwischen dem Hydraulikkammerdichtungselement 182 und dem Druckkammerdichtungselement 188 ein beispielsweise als Distanzring ausgebildetes Distanzelement 212 angeordnet, welches vorzugsweise die beiden Dichtungselemente 182 und 188 mit positioniert und zumindest in einem Minimalabstand voneinander hält.

Vorteilhafterweise ist in dem Dichtungsabschnitt 172 eine Haltestufe 216 ausgebildet, an welche ein Vorsprung 218 des Distanzelements 212 in zur Zylinderachse 122 axialer Richtung anschlägt, und so das Hydraulikkammerdichtungselement 182 zwischen der Abdichtungsstufe 174 und dem Distanzelement 212 relativ zum Gehäusekörper 214 positionsgetreu gehalten wird und jedoch durch das Anschlagen des Vorsprungs 218 an der Haltestufe 216 und der damit einhergehenden begrenzten axialen Beweglichkeit des Distanzelements 112 in Richtung auf das Hydraulikkammerdichtungselement 182 zu, dieses Hydraulikkammerdichtungselement 182 zwischen der Abdichtungsstufe 174 und dem Distanzelement 112 nicht in axialer Richtung überbelastend beansprucht wird.

Vorzugsweise greifen das Distanzelement 212 und das Druckkammerdichtungselement 188 beispielsweise mit Formschlussteilen derselben, ineinander, wobei beispielsweise eine Auskragung 222 des Druckkammerdichtungselements 188 in eine Ausnehmung 224 des Distanzelements 212 eingreift.

Günstigerweise ist ein einen Sicherungsring 232 umfassendes Sicherungselement 234 vorgesehen, wobei der Sicherungsring 232 mit einer Festlegungsfläche 235 die Dichtungen, hier das Hydraulikkammerdichtungselement 182 und das Druckkammerdichtungselement 188, in dem Dichtungsabschnitt 172 hält.

Vorteilhafterweise liegt der Sicherungsring 232 an einem axialen Sicherungsanschlag 236 an, welcher insbesondere von einer in der Zylinderwand 128 ausgebildeten Stufe an einem der Druckkammer 142 zugewandten Ende des Dichtungsabschnitts 172 ausgebildet ist, und vorteilhafterweise liegt der Sicherungsring 232 federbeaufschlagt an dem axialen Sicherungsanschlag 236 an.

Somit werden die Dichtungen positionsgetreu in dem Dichtungsabschnitt 172 von dem Sicherungsring 232 gehalten, jedoch wird eine axiale Überbeanspruchung der Dichtungen dadurch verhindert, dass der Sicherungsring 232 an dem axialen Sicherungsanschlag 236 anliegt und die Dichtungen nicht direkt beaufschlagt.

Damit sind die Dichtungselemente 182 und 188 in dem Dichtungsabschnitt 172 insbesondere zwischen der Abdichtungsstufe 174 und dem Sicherungsring 232 eingekammert und zur Führungsfläche 148 in dem Führungsabschnitt 146 radial zurück versetzt angeordnet.

In der Zylinderbodenöffnung 134 ist in dem Zylinderinnenraum 112 ein Zylinderbodenelement 252 eingesetzt, welches den Zylinderinnenraum 112 und die Druckkammer 142 zylinderbodenseitig verschließt und es ist eine Zylinderbodendichtung 256 vorgesehen, welche zwischen dem Zylinderbodenelement 252 und der Zylinderwand des Gehäusekörpers 114 abdichtet.

Vorzugsweise weist hierzu das Zylinderbodenelement 252 eine umfangsseitig verlaufende Dichtungsstufe 258 auf, in welcher das Zylinderbodendichtungselement 256 liegt und zur Zylinderachse 122 radial etwas über den Rand des Zylinderbodenelements 252 hinaus ragt, um abdichtend an der Zylinderwand anzuliegen.

Vorteilhafterweise ist ein insbesondere federbeaufschlagter Sicherungsring 262 vorgesehen, welcher das Zylinderbodendichtungselement 256 positionsgetreu an der Dichtungsstufe 258 hält.

Günstigerweise bildet das Sicherungselement 234 auch den das Zylinderbodendichtungselement 256 haltenden Sicherungsring 262 aus, wobei die zwei Sicherungsringe 232 und 262 des Sicherungselements 234 vorteilhafterweise durch ein federnd ausgebildetes Verbindungsteil 264 miteinander verbunden sind, wie auch beispielhaft in Fig. 4 dargestellt ist. Beispielsweise bilden, insbesondere geschwungen und gefedert ausgebildete, Streben 266 das Verbindungsteil 264 aus, wobei die Streben 266 an jeweiligen Enden mit einem jeweiligen der beiden Sicherungsringe 232 und 262 verbunden sind.

Insbesondere stützt sich somit das Sicherungselement 234 zum einen mit dem Sicherungsring 232 an dem axialen Sicherungsanschlag 236 und zum anderen mit dem anderen Sicherungsring 262 an dem Zylinderbodendichtungselement 256 ab und ist durch das federnde Verbindungsteil 264 zwischen diesem verspannt.

Freiräume zwischen den die Sicherungsringe 232 und 262 verbindenden Streben 266 bilden Fluiddurchlässe 268 aus, welche einen radial innenliegenden Teil der Druckkammer mit einem radial äußeren Teil der Drucckammer, in welchen insbesondere eine weiter unten detaillierter beschriebene Auslassöffnung 412 mündet, miteinander fluidführend verbinden, wie beispielhaft in Fig. 4 und 7 dargestellt ist.

Für die Befestigung des Zylinderbodenelements 252 in dem Zylinderinnenraum 112 ist insbesondere ein Bajonettverschluss vorgesehen.

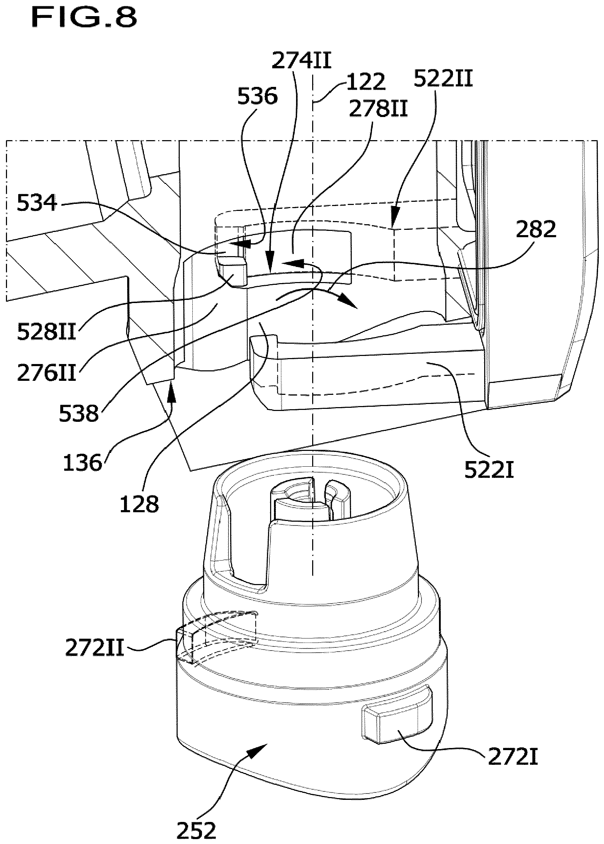

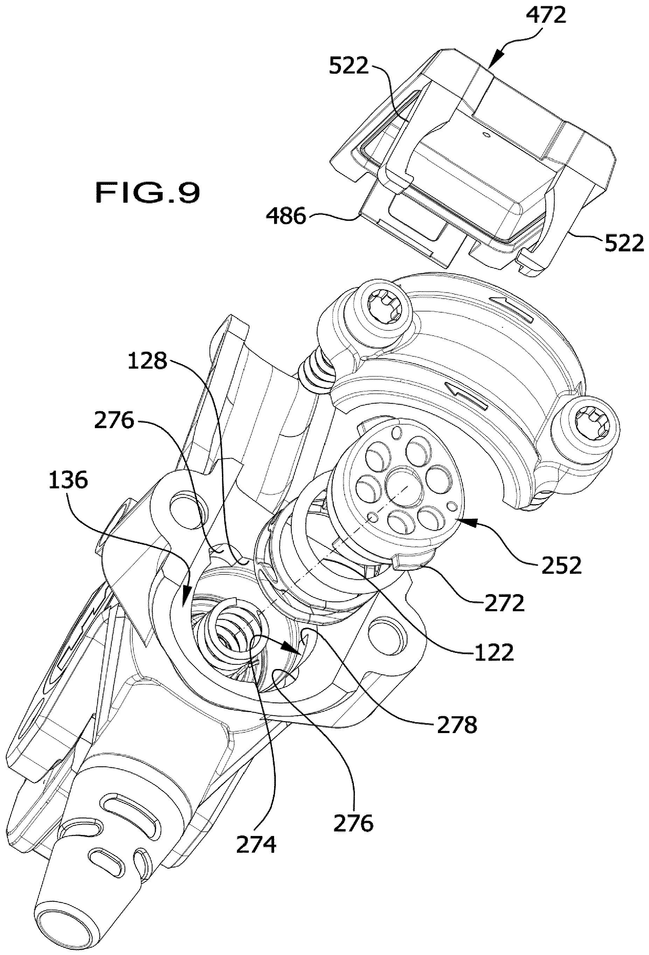

Günstigerweise weist das Zylinderbodenelement 252 insbesondere zwei als Vorsprünge ausgebildete Verschlusselemente 272 auf und in dem Zylinderinnenraum 112 sind zu den Verschlusselementen 272 korrespondierende Verschlussaufnahmen 274 ausgebildet, wie beispielhaft einzeln in den Fig. 3 und 4 sowie zusammen in den Fig. 8 bis 10 dargestellt ist.

Insbesondere weisen die Verschlussaufnahmen 274 als Aussparungen in der Zylinderwand 128 ausgebildete Einführabschnitte 276 auf, welche an der Zylinderbodenöffnung 134 sich nach außen öffnen und in zur Zylinderachse 122 axialer Richtung sich in den Gehäusekörper 114 hinein erstrecken und in radialer Richtung in den Zylinderinnenraum 112 geöffnet ausgebildet sind.

Außerdem weisen die Verschlussaufnahmen 274 jeweils einen Befestigungsabschnitt 278 auf, in welchem das jeweilige Verschlusselement 272 in einem das Zylinderbodenelement 252 in dem Zylinderinnenraum 112 befestigenden Zustand sitzt.

Durch den Befestigungsabschnitt 278 ist eine Position des Verschlusselements 272 zumindest in zur Zylinderachse 122 axialer Richtung in Richtung zu der Zylinderbodenseite 136 festlegt und eine Bewegung des Zylinderbodenelements 252 in zur Zylinderachse 122 axialer Richtung zu der Zylinderbodenseite 136 hin blockiert.

Insbesondere sind die Befestigungsabschnitte 278 als von dem jeweiligen Einführabschnitt 276 der Verschlussaufnahme 274 ausgehende in eine um die Zylinderachse 122 in eine Umlaufrichtung orientierte Verschlussrichtung 282 erstreckende Aussparungen in der Zylinderwand 128 ausgebildet.

Insbesondere ist eine im Ganzen mit 310 bezeichnete Haltevorrichtung vorgesehen, mit welcher das Plungerelement 138 und das Zylinderbodenelement 252 zu der Einsatzbaugruppeneinheit 140 zusammengehalten werden.

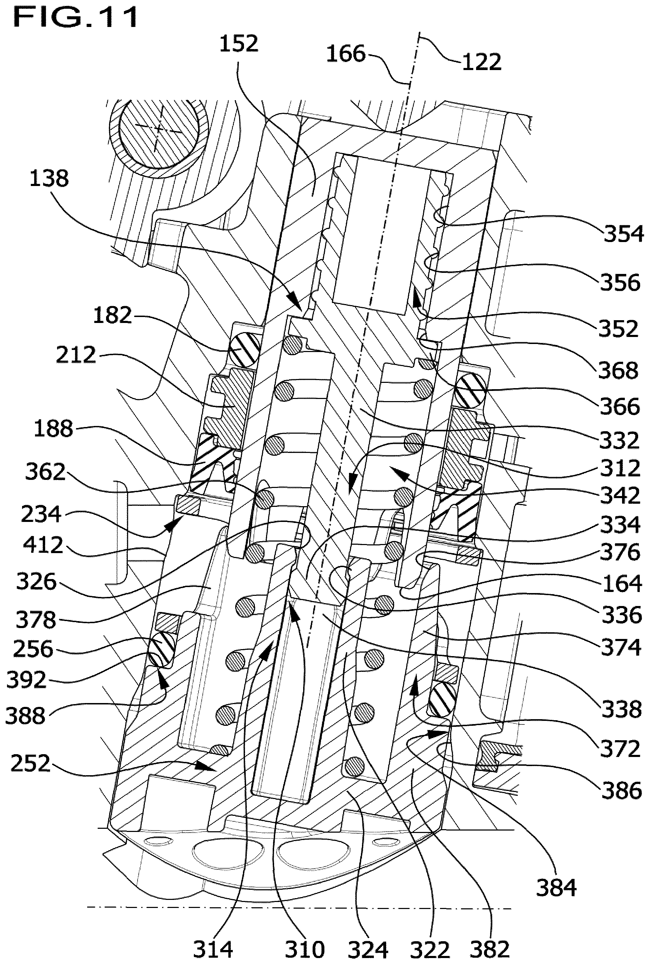

Die Einsatzbaugruppeneinheit 140, welche beispielhaft in Fig. 4 in einem noch nicht vollständig zusammenmontierten Zustand und in Fig. 11 in einem in dem Zylinderinnenraum 112 eingesetzten Zustand dargestellt ist, umfasst insbesondere auch das Hydraulikkammerdichtungselement 182, das Drucckammerdichtungselement 188, das Distanzelement 212, das Sicherungselement 234 und das Zylinderbodendichtungselement 256.

Die Haltevorrichtung 310 umfasst insbesondere ein plungerseitiges Halteelement 312 und ein bodenseitiges Halteelement 314, welches aus dem Zylinderbodenelement 252 ausgebildet ist, welche insbesondere verrastet miteinander so verbunden sind, dass das Plungerelement 138 relativ zu dem Zylinderbodenelement 252 in zur Plungerachse 166 axialen Richtung relativ zueinander bis zu einer Maximalstellung, in welcher das Plungerelement 138 einen maximalen Abstand zu dem Zylinderbodenelement 252 aufweist, relativ zueinander verschiebbar sind und eine axiale Bewegung des Plungerelements 138 über die Maximalstellung hinaus blockiert wird.

Beispielsweise ist das bodenseitige Halteelement 114 als insbesondere zur Plungerachse 166 in dem montierten Zustand koaxial ausgerichtete Hülse 322 ausgebildet, welche sich von einem von dem Zylinderbodenelement 252 ausgebildeten Bodenabschnitt 324 in Richtung auf das Plungerelement 138 zu erstreckt und eine sich zu dem Plungerelement 138 hin orientiert öffnende Öffnung 326 aufweist.

Das plungerseitige Halteelement 312 umfasst insbesondere einen Stößel 332, welcher in die Hülse 322 mit einem Rastkopf 334 hineinragt und so von der Hülse 322 geführt linear beweglich zu dieser gelagert ist.

Eine radiale Ausdehnung der Hülsenöffnung 326 ist durch einen Kragen 336 im Vergleich zu einer radialen Ausdehnung eines Innenraums 338 der Hülse 322 etwas verkleinert, sodass der Rastkopf 334, welcher im Wesentlichen eine radiale Ausdehnung wie der Innenraum 338 aufweist, bei einer axialen Bewegung des Plungerelements 138 von dem Zylinderbodenelement 252 weg in der Maximalstellung an den Kragen 336 anschlägt, sodass eine weitere derartige Bewegung blockiert ist.

Vorzugsweise weist der Rastkopf 334 an seinem axialen Ende und somit dem Teil, welches an dem Kragen 336 in der Maximalstellung anschlägt, in axialer Richtung gegenüberliegend, eine abgeschrägte Fläche auf und/oder weist der Kragen 336 an seiner nach außen gewandten Seite eine abgeschrägte Fläche auf, sodass die Öffnung 326 sich nach außen weitet, sodass durch die abgeschrägten Flächen ein Einstecken des Stößels 332 mit dem Rastkopf 334 in den Innenraum 338 der Hülse 322 zumindest erleichtert wird.

Insbesondere weist die Hülse 322 im Bereich des Kragens 336 eine gewisse Flexibilität auf, sodass der Rastkopf 334 in den Innenraum 338 der Hülse 322 eingedrückt werden kann beispielsweise unterstützt durch die abgeschrägten Flächen, jedoch ist die Hülse 322 auch im Bereich des Kragens 336 ausreichend stabil, sodass ein Entweichen des Rastkopfs 334 durch die durch den Kragen 336 verengte Öffnung 326 blockiert wird.

Insbesondere erstreckt sich der Stößel 332 durch einen hohlen Innenraum 342 des Plungerkörpers 152, wobei der Innenraum 342 sich an dem druckkammerseitigen Ende 164 des Plungerkörpers 152 in den Zylinderinnenraum 112 und dem Zylinderbodenelement 252 zugewandt öffnet.

Beispielsweise ist der Stößel 332 an seinem dem Rastkopf 334 axial gegenüberliegenden Ende an einem mit dem Plungerkörper 152 fest verbundenen Befestigungskörper 352 angeformt.

Der Befestigungskörper 352 ist insbesondere in einer Kammer 354 des Innenraums 342 eingefasst und der Befestigungskörper 352 weist beispielsweise umfangsseitig Rippen 356 auf, welche radial zur Plungerachse 166 etwas weiter hervorstehen als eine Ausdehnung der Kammer 354 groß ist, sodass der Befestigungskörper 352 mit den Rippen 356 in der Kammer 354 verspannt ist.

Bei Varianten des Ausführungsbeispiels ist vorgesehen, dass der Befestigungskörper 352 in anderer Weise vorzugsweise form- und/oder stoff- und/oder kraftschlüssig mit dem Plungerkörper 152 fest verbunden ist. Prinzipiell könnten der Befestigungskörper 352, der Stößel 332 und der Plungerkörper 152 auch einstückig ausgebildet sein.

Außerdem umfasst die Haltevorrichtung 310 eine Feder 362, welche zwischen dem Zylinderbodenelement 252 und dem Plungerelement 152 verspannt ist und das Plungerelement 152 in Richtung der Maximalstellung beaufschlagt.

Insbesondere ist die Feder 362 in dem vormontierten Zustand der Einsatzbaugruppeneinheit 140 und in der Maximalstellung vorgespannt.

Vorzugsweise stützt sich die Feder 362 an dem Zylinderbodenabschnitt 324 ab.

Beispielsweise greift die Feder 362 in den Innenraum 342 des Plungerkörpers 152 ein.

Plungerseitig stützt sich die Feder 362 vorzugsweise an dem plungerseitigen Halteelement 312 ab.

Insbesondere ist an dem plungerseitigen Halteelement 312, beispielsweise an dem dem Rastkopf 334 gegenüberliegenden Ende des Stößels 332, ein radial nach außen sich erstreckender Anschlagskragen 366 ausgebildet, an welchem die Feder 362 abgestützt ist.

Beispielsweise liegt der Anschlagskragen 366 an einer in dem Innenraum 342 ausgebildeten Stufe 368 an, an welcher der Innenraum 342 sich in Richtung eines geschlossenen Endes verengt und an welcher insbesondere sich die Kammer 354 mit dem Befestigungskörper 352 anschließt.

Somit greift insbesondere die Feder 362 in den Innenraum 342 des Plungerkörpers 152 ein.

Vorzugsweise ist die Feder 362 den Stößel 332 und die Hülse 322 umgreifend angeordnet.

Vorzugsweise weist das Zylinderbodenelement 252 eine Fassung 372 auf, welche zumindest das druckkammerseitige Teil 168 des Plungerkörpers 152 zumindest teilweise stabilisierend umgreift und in einen Hohlraum derselben das druckkammerseitige Teil 168 des Plungerkörpers 152 bei einer Druckbeaufschlagung des Hydraulikmediums eintaucht.

Insbesondere umfasst die Fassung 372 einen von dem Bodenabschnitt 324 sich zur Zylinderachse 122 axial erstreckenden Wandabschnitt 374, welcher umfangsseitig zumindest teilweise zylindrisch und koaxial zur Zylinderachse 122 ausgebildet ist.

An einem dem Zylinderboden gegenüberliegenden Ende weist die Fassung 372 eine Fassungsöffnung 376 auf, durch welche der Plungerkörper 152 mit seinem druckkammerseitigen Teil 168 zumindest teilweise in ein Inneres der Fassung 372 eingreift.

Dabei ist eine radiale Ausdehnung der Fassung 372, insbesondere ein radialer Abstand des Wandabschnitts 374 von der Zylinderachse 122, derart groß, dass im Inneren der Fassung 372 die Hülse 322 und die die Hülse 322 umgreifende Feder 362 angeordnet sind und zwischen der Feder 362 und der Fassung 372, insbesondere ihrem Wandabschnitt 374, das druckkammerseitige Teil 168 des Plungerkörpers 152 sich bewegen kann.

Vorzugsweise weist der Wandabschnitt 374 zumindest eine radial durchgängige Aussparung 378 auf, welche sich beispielsweise ausgehend von der Fassungsöffnung 376 axial in den Wandabschnitt 374 hinein erstreckt, als insbesondere zur Fassungsöffnung 376 zusätzliche Verbindung des Inneren der Fassung 372 mit der Umgebung der Fassung 372, welche zumindest Teile der Druckkammer 142 ausbilden.

Insbesondere ist an der das Innere der Fassung 372 begrenzenden Seite des Wandabschnitts 374 zumindest eine Nut 379 ausgebildet, welche zum einen zur Plungerachse 166 axialer Richtung sich tiefer in das Innere der Fassung 372 hinein erstreckt als der Plungerkörper 152 in das Innere hineingreift und zum anderen auch bei einem eingreifenden Plungerkörper 152 sich in einen die Fassung 372 umgebenden Teil der Druckkammer 142 öffnet, wie beispielhaft in Fig. 6 und 7 dargestellt ist.

Insbesondere erstreckt sich die Nut 379 bis zu einem von dem Bodenabschnitt 324 axial gegenüberliegenden Ende des Wandabschnitts 374, vorzugsweise bis zu der Aussparung 378 oder bei Varianten bis zu der Fassungsöffnung 376. Damit verbindet die Nut 379 auch bei einem eingreifenden Plungerkörper 152 einen in dem Inneren der Fassung 372 und in dem Innenraum 342 des Plungerkörpers 152 gelegenen Teil der Druckkammer 142 mit einem die Fassung 372 umgebenden Teil der Druckkammer 142.

Vorzugsweise erstreckt sich von dem Zylinderbodenabschnitt 324 des Zylinderbodenelements 252 in zur Zylinderachse 122 axialer Richtung ein Befestigungswandabschnitt 382, welcher zumindest teilweise im Bereich der Zylinderbodenöffnung 134 an einem Endabschnitt 384 der Zylinderwand 128 anliegt.

Beispielsweise bildet der Befestigungswandabschnitt 382 einen unteren Teil des Wandabschnitts 374 der Fassung 372 aus, wobei mit der weiteren axialen Erstreckung des Wandabschnitts 374 eine in radialer Richtung gemessene Wanddicke des Wandabschnitts 374 kleiner wird und dabei die Dichtungsstufe 258 für das Zylinderbodendichtungselement 256 an der radialen Außenseite des Wandabschnitts 374 ausgebildet wird, bis zu welcher sich beispielsweise der Befestigungswandabschnitt 382 erstreckt.

Beispielsweise ist im Bereich des Endabschnitts 384 der Zylinderwand 128 ein Verjüngungsabschnitt 386 vorgesehen, an welchem eine radiale Ausdehnung des Zylinderinnenraums 112 mit zunehmender axialer Erstreckung in den Gehäusekörper 114 hinein zumindest etwas abnimmt und vorzugsweise liegt der Befestigungswandabschnitt 382 bezogen auf die axiale Richtung beidseitig des Verjüngungsabschnitts 386 an der Zylinderwand 128 an.

In der Zylinderwand 128 ist im Bereich der Druckkammer 142, insbesondere in einem von dem axialen Sicherungsanschlag 236 in Richtung zu der Zylinderbodenöffnung 134 sich erstreckendem Abschnitt der Zylinderwand 128 eine Auslassöffnung 412 ausgebildet, von welcher sich ein Auslasskanal 414, beispielsweise zu einem Druckanschluss 416 der Gebereinheit 100, hinweg erstreckt.

Insbesondere bildet der Gehäusekörper 114 einen den Auslasskanal 414 zumindest teilweise umfassenden Anschlussstutzen 418 aus, welcher beispielsweise auch den Druckanschluss 416 ausbildet oder an welchen der Druckanschluss 416 anschließbar und befestigbar ist.

Vorzugsweise erstreckt sich der Anschlussstutzen 416 zumindest näherungsweise parallel zur Lenkererstreckungsrichtung.

Die Auslassöffnung 412 ist vorzugsweise in einem axialen Bereich zwischen den beiden Sicherungsringen 232 und 262 und vorteilhafterweise der zumindest einen Aussparung 378 in dem Wandabschnitt 374 zumindest im Wesentlichen direkt gegenüber liegend ausgebildet.

Außerdem ist in der Zylinderwand 128 im Bereich des Dichtungsabschnittes 172 in einem zur Zylinderachse 122 axialen Abschnitt zwischen dem Hydraulikkammerdichtungselement 182 und dem Druckkammerdichtungselement 188 eine Einlassöffnung 432 ausgebildet, an welcher ein Ausgleichskanal 434 in den Zylinderinnenraum 112 und insbesondere in die Hydraulikkammer 184 mündet, wobei der Teil der Hydraulikkammer 184, in welchen der Ausgleichskanal 434 mündet, in dem druckbeaufschlagenden Zustand des Plungerelements 138 durch das Druckkammerdichtungselement 188 von der Druckkammer 142 abgetrennt ist.

Der Ausgleichskanal 434 führt in einen Reservoirraum 436 eines Ausgleichsbehälters 438, wobei der Reservoirraum 436 zur Bevorratung von Hydraulikmedium vorgesehen ist und über den Ausgleichskanal 434 ein Austausch von Hydraulikmedium zwischen dem Reservoirraum 436 und der Hydraulikkammer 184 erfolgen kann.

Um zum einen Ausgleich mit Hydraulikmedium zwischen der Druckkammer 142 und dem Reservoirraum 436 in dem Grundzustand des Plungerelements 138 und zum anderen eine Druckbeaufschlagung des Hydraulikmediums in der Druckkammer 142 in dem druckbeaufschlagenden Zustand des Plungerelements 138 zu ermöglichen, weist insbesondere das Plungerelement 138, hier der Plungerkörper 152 im Bereich seines druckkammerseitigen Teils 168 Aussparungen 452 auf, welche in den zu dem Grundzustand des Plungerelements 138 korrespondierenden Stellungen eine Fluidverbindung zwischen der Druckkammer 142 und dem Teil der Hydraulikkammer 184, in welchen die Einlassöffnung 432 einmündet, und somit eine Fluidverbindung zwischen der Druckkammer 142 und dem Reservoirraum 436 ausbilden, wobei diese Fluidverbindung jedoch in den zu dem druckbeaufschlagenden Zustand des Plungerelements 138 korrespondierenden Stellungen unterbrochen ist.

Beispielsweise erstecken sich die Aussparungen 452 von dem druckkammerseitigen Ende 164 des Plungerkörpers 152 in zur Plungerachse 166 axialer Richtung soweit, dass in zu dem Grundzustand korrespondierenden Stellungen des Plungerelements 138 die Aussparungen 452 sich in axialer Richtung an dem Druckkammerdichtungselement 188 vorbei erstecken, wie beispielhaft in Fig. 5 dargestellt ist, und jedoch der Abschnitt des Plungerkörpers 152 mit den Aussparungen 452 in zu dem druckbeaufschlagenden Zustand korrespondierenden Stellungen des Plungerelements 138 vollständig in der Druckkammer 142 angeordnet ist, wie beispielhaft in Fig. 6 dargestellt ist.

Insbesondere liegt das Druckkammerdichtungselement 188 in dem druckbeaufschlagenden Zustand an einem umfangsseitig zur Plungerachse 166 geschlossen ausgebildeten Abschnitt des Plungerelements 138, hier des Plungerkörpers 152, abdichtend an, sodass die Druckkammer 172 fluiddicht von dem Teil der Hydraulikkammer 184, in welchem die Einlassöffnung 432 einmündet, abgetrennt ist.

Beispielsweise erstrecken sich die Aussparungen 452 in zur Plungerachse radialer Richtung durchgängig von einer Außenseite des Plungerkörpers in den Innenraum 342 des Plungerkörpers 152.

Vorteilhafterweise weist das Distanzelement 212 Durchbrüche 444 auf, die von einer der Zylinderwand 128 zugewandten Seite des Distanzelements 212 zu einer dem Plungerelement 138 zugewandten Seite des Distanzelements 212 verlaufen, wie beispielhaft in Fig. 7 dargestellt ist.

Vorzugsweise öffnen sich die Durchbrüche 444 auf der dem Plungerelement 138 zugewandten Seite in zumindest einen relativ zu einem das Plungerelement 138 kontaktierenden Abschnitt zurückgesetzten Abschnitt 446, welcher beispielsweise als sich entlang der axialen Erstreckung des Distanzelementes 212 verlaufende Nut ausgebildet ist, wobei ein an dem zumindest einen oder an einem jeweiligen zurückgesetzten Abschnitt 446 ausgebildeter Hohlraum in zu dem Grundzustand korrespondierenden Stellungen des Plungerelementes 138 fluidführend mit den Aussparungen 452 verbunden ist.

Insbesondere weist das Distanzelement 212 an der der Zylinderwand 128 zugewandten Seite einen zurückgesetzten Abschnitt 448 auf, wobei zumindest im Bereich dieses Abschnitts 448 zwischen dem Distanzelement 212 und der Zylinderwand 128 ein Hohlraum ausgebildet ist, in welchen die Durchbrüche 444 und die Einlassöffnung 432 münden.

Insbesondere wird hierdurch ein Fließen des Hydraulikmediums zwischen der Einlassöffnung 432 und den Aussparungen 452 in dem Plungerkörper 152 zumindest unterstützt und/oder ermöglicht.

Vorzugsweise wird der Reservoirraum 436 zumindest teilweise durch eine insbesondere außenseitige Reservoirausnehmung 456 in dem Gehäusekörper 114 begrenzt und von einem vorzugsweise zumindest teilweise formflexiblen Hüllenelement 458 begrenzt, wobei das Hüllenelement 458 beispielsweise als Balg ausgebildet ist und/oder eine Membran umfasst.

Das Hüllenelement 458 umfasst insbesondere einen beispielsweise als Wulstabschnitt ausgebildeten Abdichtungsabschnitt 462, welcher, beispielsweise mit zumindest zwei Dichtlippen 464, an einem die Reservoirausnehmung 456 umfangsseitig geschlossen umlaufenden Abdichtungsbereich 468 fluidabdichtend anliegt.

Außerdem ist ein Deckelelement 472 vorgesehen, insbesondere als Teil des Gehäuses 120, welches das Hüllenelement 458 zu einer Umgebung der Gebereinheit 100 hin vollumfänglich übergreift, wie beispielhaft in Fig. 2 und 5 dargestellt ist.

Insbesondere umfasst das Deckelelement 472 ein Beaufschlagungsteil 474, welches insbesondere ein umfangsseitig in sich geschlossener Randabschnitt des Deckelelements 472 ist, wobei mit dem Beaufschlagungsteil 474 der Abdichtungsabschnitt 462 des Hüllenelements 458 an den Abdichtungsbereich 468 des Gehäusekörpers 114 fluidabdichtend angedrückt wird.

Vorzugsweise umfasst das Beaufschlagungsteil 474 einen Beaufschlagungsvorsprung 476, welcher auf den Abdichtungsabschnitt 462 drückt, sowie einen insbesondere als Wandfortsatz ausgebildeten Abstandshalter 478, welcher an dem Abdichtungsbereich 468 anliegt und über welchen der Krafthauptschluss bei der Beaufschlagung des Abdichtungsabschnitts 462 erfolgt.

Insbesondere ist somit das Hüllenelement 458 zwischen dem Gehäusekörper 114 und dem Deckelelement 472 angeordnet und dessen Abdichtungsabschnitt 462 dichtet zwischen dem Deckelelement 472 und dem Gehäusekörper 114 ab.

Das Deckelelement 472 ist insbesondere mit einer im Ganzen mit 482 bezeichneten Befestigungsvorrichtung an dem Gehäusekörper 114 befestigt, und zwar insbesondere so, dass es mit der zur Beaufschlagung des Abdichtungsabschnitts 462 benötigten Kraft an dem Gehäusekörper 114 angepresst wird.

Beispielsweise umfasst die Befestigungsvorrichtung 482 zumindest eine insbesondere an der Betätigungsseite 126 vorgesehene Schnappvorrichtung 484, welche insbesondere eine Lasche 486 an dem Deckelelement 472 umfasst, wobei die Lasche 486 in einem befestigten Zustand an einem an dem Gehäusekörper 114 ausgebildeten Rastelement einrastet, wobei in Fig. 6 lediglich ein mit der Lasche 486 nicht direkt in Kontakt stehender Abschnitt 488 des Rastelementes beispielhaft dargestellt ist.

Insbesondere umfasst die Befestigungsvorrichtung 482 zwei an dem Deckelelement 472 ausgebildete Haltearme 522, welche insbesondere in dem befestigten Zustand das Zylinderbodenelement 252 zumindest teilweise hakenartig umgreifen.

Insbesondere sind hierfür zwei Durchbrüche 524, von welchen einer beispielhaft in Fig. 3 zu sehen ist, in dem Gehäusekörper 114 ausgebildet, welche von außen insbesondere von der Seite des Gehäusekörpers 114, an welcher die Reservoirausnehmung 456 ausgebildet ist, in eine jeweilige Verschlussaufnahme 274, insbesondere in deren Befestigungsabschnitt 278, sich hinein erstrecken.

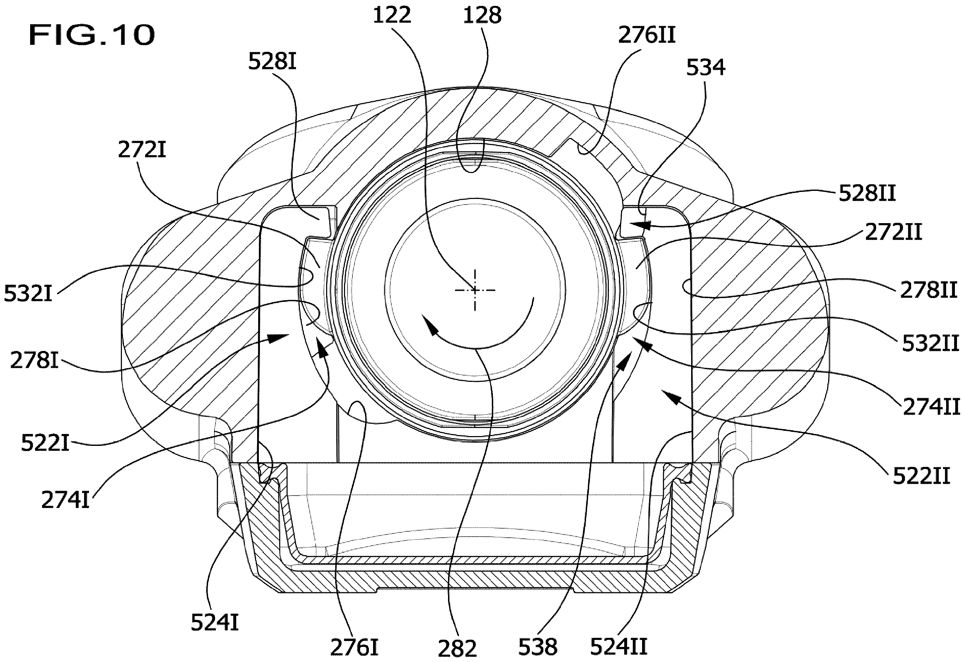

In dem befestigten Zustand erstrecken sich die Haltearme 522 durch die Durchbrüche 524 in die Verschlussaufnahmen 274 hinein und umgreifen beispielsweise mit einem Hakenvorsprung 528 an deren Enden ein jeweiliges Verschlusselement 272, wie beispielhaft in Fig. 10 dargestellt ist.

Bei einer der Verschlussaufnahmen, hier beispielsweise bei der Verschlussaufnahme 274I, liegt ein am Ende des darin eingreifenden Haltearms 522I ausgebildeter Hakenvorsprung 528 in dem bezogen auf die Verschlussrichtung 282 hinteren Ende des Befestigungsabschnitts 278, und in dem Haltearm 522I ist eine Einbuchtung 532I ausgebildet, in welcher das von dieser Verschlussaufnahme 274I aufgenommene Verschlusselement 272 positioniert werden kann.

Insbesondere erstreckt sich die Einbuchtung 532 entlang des Haltearms 522 bis in den Bereich des Übergangs des Befestigungsabschnitts 278 in den Einführabschnitt 276, sodass das Verschlusselement 272 durch den Einführabschnitt 276 durch die Einbuchtung 532 in den Befestigungsabschnitt 278 beispielsweise im Anschlag mit dem Hakenvorsprung 528I positioniert werden kann.

Auch der andere Haltearm, hier der Haltearm 522II, weist eine Einbuchtung 532II auf, welche in dem befestigten Zustand in dem Befestigungsabschnitt 278II der weiteren Verschlussaufnahme 274II positioniert ist und in welche das andere Verschlusselement 272II in dem befestigten Zustand positioniert werden kann.

Auch dieser Haltearm 522II weist an seinem Ende einen Hakenvorsprung 528II auf. Bei der Verschlussaufnahme 274II, in welcher dieser Haltearm 522II eingreift, ist jedoch der Hakenvorsprung 528II in dem befestigten Zustand in einem Übergangsbereich zwischen dem Einführabschnitt 276II und dem Befestigungsabschnitt 278II angeordnet.

Hierbei ist der Hakenvorsprung 528II vorzugsweise nicht über die ganze Höhe des Haltearms 522II ausgebildet, wobei die Höhe des Haltearms 522 in dem befestigten Zustand in zur Zylinderachse 122 axialer Richtung gemessen wird, sondern lediglich in einem unteren Bereich des Endes des Haltearms 522 ausgebildet, wobei der untere Bereich bezogen auf die Zylinderachse 122 bei einem ordnungsgemäß eingesetzten Haltearm 522II ein zur Zylinderachse 122 axial der Zylinderbodenseite 136 zugewandter Bereich ist.

Damit liegt der Hakenvorsprung 528II an einem der Zylinderbodenseite 136 zugewandten Wandbereich des Befestigungsabschnittes 278II an.

Außerdem ist so bei diesem Haltearm 522II an dessen Ende eine Aussparung 534 ausgebildet, welche beispielhaft in den Fig. 8 und 10 zu erkennen ist, durch welche ein den Einführabschnitt 276II mit dem Befestigungsabschnitt 278II verbindender offener Bereich 536 auch bei in die Verschlussaufnahme 274II eingesetztem Haltearm 522II verbleibt. Hierbei ist die Aussparung 534 und damit der Hakenvorsprung 528II derart ausgebildet, dass der verbleibende offene Bereich 536 hinreichend groß ist, dass das korrespondierende Verschlusselement 272II durch den verbleibenden offenen Bereich 536 aus dem Einführabschnitt 276II in den Befestigungsabschnitt 278II und die Einbuchtung 532II eingeführt und dort positioniert werden kann, wofür ein axiales Heben des Verschlusselementes 272II insbesondere gegen die Beaufschlagung der Feder 362 über den Hakenvorsprung 528II erforderlich ist.

Insbesondere wird so in der Verschlussaufnahme 274II eine Verschlusskammer 538 ausgebildet, welche sich von einem von dem Befestigungsabschnitt 278II ausgebildeten Kammerboden in zur Zylinderachse 122 axialer Richtung ausdehnt und in der Umlaufrichtung um die Zylinderachse 122 zu in der Verschlussrichtung 282, beispielsweise durch einen Abschnitt des Haltearms 522 und/oder einen den Befestigungsabschnitt 278 begrenzenden Bereich des Gehäusekörpers 114, begrenzt ist und in zur Verschlussrichtung 282 entgegengesetzten Richtung durch den Hakenvorsprung 528 begrenzt ist. Außerdem wirkt die Feder 362 der Haltevorrichtung 310 auch als Plungerfeder 552, welche das Plungerelement 138 in Richtung des Grundzustands beaufschlagt.

Zur Sicherung des Plungerelements 138 in dem Zylinderinnenraum 112 ist an der Betätigungsöffnung 124 zumindest ein axialer Anschlag 562, beispielsweise als in die Betätigungsöffnung 124 hineinragender Kragenabschnitt, wie beispielhaft in Fig. 3 dargestellt ist, ausgebildet, gegen welchen das Plungerelement 138 durch die Plungerfeder 552 in dem unbetätigten Grundzustand der Gebereinheit 100 gedrückt wird.

Insbesondere umfasst die Gebereinheit 100 außerdem eine beispielhaft in Fig. 2 dargestellte Betätigungsvorrichtung 572, welche ein Betätigungselement 574 umfasst, welches bei einer Betätigung der Betätigungsvorrichtung 572 durch die Betätigungsöffnung 124 hindurch in den Zylinderinnenraum 112 eingreift und das Plungerelement 138 in zur Zylinderachse 122 axialer Richtung in den Zylinderinnenraum 112 entgegen der Beaufschlagung durch die Plungerfeder 552 und damit entgegen der Beaufschlagung durch die Feder 362 der Haltevorrichtung 310 verschiebt und so das Plungerelement 138 aus dem Grundzustand in den druckbeaufschlagenden Zustand versetzt.

Insbesondere ist die Gebereinheit 100 eine handbetätigte Gebereinheit und die Betätigungsvorrichtung 572 ebenfalls handbetätigt.

Vorzugsweise weist die Betätigungsvorrichtung 572 einen einen Handgriff 576 umfassenden Hebelarm 578 auf, welcher um eine Drehachse 582 drehbar an dem Gehäusekörper 114 gelagert ist und vorzugsweise durch eine Feder 584 in einer Grundstellung gehalten wird. Bei einer Betätigung des Hebelarms 578, das heißt einer Drehung desselben um die Drehachse 582 insbesondere entgegen der Beaufschlagung durch die Feder 584, drückt der Hebelarm 578 auf das Betätigungselement 574, welches hierdurch in den Zylinderinnenraum 112 eingreift. Durch das Zurücksetzen des Hebelarms 578 in seine Grundstellung durch die Feder 584 wird auch das Betätigungselement 574 aus dem Zylinderinnenraum 112 herausgenommen.

Vorzugsweise umfasst die Gebereinheit 100 noch eine Halterung 592, welche beispielsweise als Klemmvorrichtung ausgebildet ist, zur Montage der Gebereinheit 100 an einen Lenker eines lenkergeführten Fahrzeugs.

Insbesondere umfasst die Halterung 592 ein Spangenelement 594, welches zusammen mit einem insbesondere an der Zylinderbodenseite 136 durch den Gehäusekörper 114 ausgebildetes Spangenteil 596 eine Einfassung für einen Abschnitt des Lenkers ausbildet und wobei das Spangenelement 594 mit Befestigungsmitteln 598 mit dem Spangenteil 596 verbunden und insbesondere ein zwischen dem Spangenteil 596 und dem Spangenelement 594 angeordneter Abschnitt des Lenkers verspannt werden kann.

Insbesondere bildet das Zylinderbodenelement 252 zumindest einen Teil des Spangenteils 596 aus und eine bezogen auf den Zylinderinnenraum 112 nach außen orientierte Seite des Zylinderbodenelements 252 bildet eine Auflagefläche 599 des Spangenteils 596 aus, an welcher in dem montierten Zustand ein Teil des Lenkers anliegt.

Insbesondere sind somit ein Aufbau, eine Funktionsweise und Vorteile der Erfindung und des Ausführungsbeispiels kurz zusammengefasst wie folgt.

Die insbesondere vormontierbare Einsatzbaugruppeneinheit 140 umfasst das Plungerelement 138 und das Zylinderbodenelement 252, welche durch die Haltevorrichtung 310 zusammengehalten werden und so vorteilhafterweise als Baugruppe vormontierbar sind.

Insbesondere werden durch die vorgespannte Feder 362 der Haltevorrichtung 310 das plungerseitige Halteelement 312 und das bodenseitige Halteelement 314 in einen sich gegenseitig haltenden Zustand gedrückt und die Baugruppeneinheit 140 stabilisiert.

Günstig ist, dass das druckkammerseitige Ende 164 des Plungerelements 138 von der Fassung 372 stabilisierend gehalten wird, sodass einem Verkippen des Plungerelements 138 gegenüber dem Zylinderbodenelement 252 relativ zu der Plungerachse 166 entgegengewirkt wird.

Insbesondere wird durch das stabile Zusammenhalten des Plungerelements 138 und des Zylinderbodenelements 252 durch die Haltevorrichtung 310 mit der insbesondere vorgespannten Feder 362 und beispielsweise dem stabilisierenden Umgreifen des Plungerelements 138 durch die Fassung 372 eine automatisierte Fertigung der Gebereinheit zumindest vereinfacht, da die Einsatzbaugruppeneinheit die hierfür notwendige Stabilität aufweist.

Außerdem umfasst vorzugsweise die Einsatzbaugruppeneinheit 140 die für die Abdichtung der Druckkammer 142 und der Hydraulikkammer 184 notwendigen Dichtungselemente, hier das Hydraulikkammerdichtungselement 182, das Druckkammerdichtungselement 188 und das Zylinderbodendichtungselement 256, sowie insbesondere das Distanzelement 212 und das Sicherungselement 234, sodass vorteilhafterweise die Einsatzbaugruppeneinheit 140 zumindest im Wesentlichen sämtliche in den Zylinderinnenraum 112 einzubauende Teile umfasst, und somit eine Endmontage der Gebereinheit vereinfacht wird, da lediglich die vormontierte Einsatzbaugruppeneinheit 140 in dem Zylinderinnenraum 112 zu montieren ist.

Für den Einbau der Einsatzbaugruppeneinheit 140 wird diese mit dem Plungerelement 138 voran durch die Zylinderbodenöffnung 134 in den Zylinderinnenraum 112 eingesetzt und dabei der Gleitabschnitt 154 des Plungerelements 138 in dem Führungsabschnitt 146 positioniert.

Zum Befestigen der Baugruppeneinheit 140 wird das Zylinderbodenelement 252 mit dem Bajonettverschluss an dem Gehäusekörper 114 befestigt, wobei zunächst eine in zur Zylinderachse 122 axiale Verschiebung des Zylinderbodenelements 152 erforderlich ist, um die Verschlusselemente 272 durch die Einführabschnitte 276 zu den Befestigungsabschnitten 278 zu führen.

Für das Einsetzen der Verschlusselemente 272 in den Befestigungsabschnitt 278 der jeweiligen Verschlussaufnahme 274 ist ein Eindrücken des Zylinderbodenelements 252 über seine in dem befestigten Zustand vorgesehene axiale Lage in den Zylinderinnenraum näher auf das Plungerelement 138 zu notwendig, um das zumindest eine Verschlusselement 272II in zur Zylinderachse 122 axialer Richtung an dem in seiner Höhe reduzierten Hakenvorsprung 528II, welcher zwischen dem Einführabschnitt 276II und dem Befestigungsabschnitt 278II positioniert ist, vorbeizuführen. Das vertiefte Einführen des Zylinderbodenelements 252 in den Zylinderinnenraum 212 wird durch die federnde Lagerung des Plungerelements 138 sowie der federnden Ausbildung des Sicherungselements 234 ermöglicht.

Ist das Verschlusselement 272II axial über den in seiner Höhe reduzierten Hakenvorsprung 528II gehoben, kann das Zylinderbodenelement 252 in der Verschlussrichtung 282 gedreht werden, wobei das Verschlusselement 272II durch den von der Aussparung 534 zumindest teilweise ausgebildeten offenen Bereich an dem Hakenvorsprung 528 vorbeigeführt wird und, wodurch die Verschlusselemente 272 in den Befestigungsabschnitten 278 positioniert werden und das Verschlusselement 272II in der Verschlusskammer 538 eingekammert wird. Hierbei drückt die Feder 362 das Zylinderbodenelement 252 in Richtung der Zylinderbodenseite 136 und damit das Verschlusselement 272II in die Verschlusskammer 538.

Vorteilhafterweise stützt sich das Sicherungselement 234 mit dem einen Sicherungsring 232 an dem axialen Sicherungsanschlag 236 ab, sodass eine Überbelastung der zwischen diesem Sicherungsring 232 und beispielsweise der Abdichtungsstufe 174 in dem Dichtungsabschnitt 172 angeordneten Dichtungselemente 182 und 188 vermieden wird.

In dem zusammengesetzten Zustand sind das Hydraulikkammerdichtungselement 182 und das Druckkammerdichtungselement 188 positionsgetreu relativ zu dem Gehäusekörper 114 in dem Dichtungsabschnitt 172 angeordnet und vorzugsweise beispielsweise durch die Abdichtungsstufe 174 und dem Sicherungsring 232 eingekammert. Dabei erfüllen die Dichtungselemente 182 und 188 relativ zu dem Gehäusekörper 114 eine statische Abdichtungsfunktion.

Vorteilhafterweise wird mit dem insbesondere federbeaufschlagten Sicherungsring 262 das Zylinderbodendichtungselement 256 in seiner Lage gesichert.

Das Plungerelement 138 ist in zur Zylinderachse 122 axialer Richtung linear beweglich gelagert, wobei die Plungerfeder 552 das Plungerelement 138 in Richtung der Betätigungsöffnung 124 und damit in den Grundzustand beaufschlagt und insbesondere in dem unbetätigten Grundzustand gegen den axialen Anschlag 562 in der Betätigungsöffnung 124 drückt.

In zu dem Grundzustand korrespondierenden Stellungen des Plungerelements 138 bilden die Aussparungen 452 eine Fluidverbindung an dem Druckkammerdichtungselement 188 vorbei, sodass ein Austausch von Hydraulikmedium zwischen dem Reservoirraum 436 und der Druckkammer 142 über den Ausgleichskanal 434 und die Einlassöffnung 432 erfolgen kann.

Bei einer Betätigung des Plungerelements, insbesondere mittels der Betätigungsvorrichtung 572, wird das Plungerelement 138 entgegen der Beaufschlagung mit der Plungerfeder 552 linear zur Zylinderachse 122 auf das Zylinderbodenelement 252 zu bewegt und das Druckkammerdichtungselement 188 dichtet die Druckkammer 142 vollständig zwischen dem Plungerelement 138 und dem Gehäusekörper 114 ab, insbesondere ist die Fluidverbindung durch die Aussparung 452 zu dem Teil der Hydraulikkammer 184, in welche die Einlassöffnung 432 einmündet, unterbrochen und bei einer weiteren derartigen Linearbewegung des Plungerelements 138 wird das Hydraulikmedium in der Druckkammer 142 unter Druck gesetzt und als druckbeaufschlagtes Hydraulikmedium über die Auslassöffnung 412 dem Druckanschluss 416 zugeführt.

Dadurch, dass die Haltearme 522 des Deckelelements 472 das Zylinderbodenelement 252, insbesondere dessen Verschlusselemente 272 umgreifen, wird das Deckelelement 472 sicher an dem Gehäusekörper 114 gehalten und durch die Haltearme 522 ist eine stabile Befestigung des Deckelelementes ermöglicht.

Insbesondere kann durch diese Vollplungerlösung mit den relativ zu dem Gehäusekörper 114 statischen Abdichtungen eine geringere Bauhöhe der Druckkammer 142 und der Hydraulikkammer 184 und damit der gesamten Gebereinheit 100 erreicht werden.

Da die Feder 362 der Haltevorrichtung 310 auch zugleich die Plungerfeder 552 ausbildet und so zum einen für die Arretierung und Sicherung des Zylinderbodenelements 252 und insbesondere des Deckelelements 472 über dessen Haltearme 522, und zum anderen für die Beaufschlagung des Plungerelements 138 in den Ausgangszustand sorgt, ist eine bauteilreduzierende kompakte Lösung realisiert.

### BEZUGSZEICHENLISTE

- 100: Gebereinheit
- 104: Lenker
- 106: Lenkererstreckungsrichtung
- 108: Lenkergriff
- 112: Zylinderinnenraum
- 114: Gehäusekörper
- 120: Gehäuse
- 122: Zylinderachse
- 124: Betätigungsöffnung
- 126: Betätigungsseite
- 128: Zylinderwand
- 134: Zylinderbodenöffnung
- 136: Zylinderbodenseite
- 138: Plungerelement
- 140: Einsatzbaugruppeneinheit
- 142: Druckkammer
- 146: Führungsabschnitt
- 148: Führungsfläche
- 152: Plungerkörper
- 154: Gleitabschnitt
- 162: Betätigungsende
- 164: druckkammerseitiges Ende
- 166: Plungerachse
- 168: druckkammerseitiges Teil
- 172: Dichtungsabschnitt
- 174: Abdichtungsstufe
- 176: Festlegungsfläche
- 182: Hydraulikkammerdichtungselement
- 184: Hydraulikkammer
- 188: Druckkammerdichtungselement
- 192: Dichtlippe
- 194: wandseitiger Dichtabschnitt
- 212: Distanzelement
- 216: Haltestufe
- 218: Vorsprung
- 222: Auskragung
- 224: Ausnehmung
- 232: Sicherungsring
- 234: Sicherungselement
- 235: Festlegungsfläche
- 236: axialer Sicherungsanschlag
- 252: Zylinderbodenelement
- 256: Zylinderbodendichtungselement
- 258: Dichtungsstufe
- 262: Sicherungsring
- 264: Verbindungsteil
- 266: Streben
- 268: Fluiddurchlass
- 272: Verschlusselement
- 274: Verschlussaufnahme
- 276: Einführabschnitte
- 278: Befestigungsabschnitt
- 282: Verschlussrichtung
- 310: Haltevorrichtung
- 312: plungerseitiges Halteelement
- 314: bodenseitiges Halteelement
- 322: Hülse
- 324: Bodenabschnitt
- 326: Öffnung
- 332: Stößel
- 334: Rastkopf
- 336: Kragen
- 338: Innenraum der Hülse
- 342: Innenraum des Plungerkörpers
- 352: Befestigungskörper
- 354: Kammer
- 356: Rippen
- 362: Feder
- 366: Anschlagskragen
- 368: Stufe
- 372: Fassung
- 374: Wandabschnitt
- 376: Fassungsöffnung
- 378: Aussparungen
- 379: Nut
- 382: Befestigungswandabschnitt
- 384: Endabschnitt der Zylinderwand
- 386: Verjüngungsabschnitt
- 412: Auslassöffnung
- 414: Auslasskanal
- 416: Druckanschluss
- 418: Anschlussstutzen
- 432: Einlassöffnung
- 434: Ausgleichskanal
- 436: Reservoirraum
- 438: Ausgleichsbehälter
- 444: Durchbrüche
- 446: zurückgesetzter Abschnitt
- 448: zurückgesetzter Abschnitt
- 452: Aussparungen
- 456: Reservoirausnehmung
- 458: Hüllenelement
- 462: Abdichtungsabschnitt
- 464: Dichtlippen
- 468: Abdichtungsbereich
- 472: Deckelelement
- 474: Beaufschlagungsteil
- 476: Beaufschlagungsvorsprung
- 478: Abstandshalter
- 482: Befestigungsvorrichtung
- 484: Schnappvorrichtung
- 486: Lasche
- 488: Abschnitt eines Rastelementes
- 522: Haltearme
- 524: Durchbrüche
- 528: Hakenvorsprung
- 532: Einbuchtung
- 534: Aussparung
- 536: offener Bereich
- 538: Verschlusskammer
- 552: Plungerfeder
- 562: axialer Anschlag
- 572: Betätigungsvorrichtung
- 574: Betätigungselement
- 576: Handgriff
- 578: Hebelarm
- 582: Drehachse
- 584: Feder
- 592: Montagevorrichtung
- 594: Spangenelement
- 596: Spangenteil
- 598: Befestigungsmittel
- 599: Auflagefläche

## Patentansprüche

1. Gebereinheit (100) zur Bereitstellung von druckbeaufschlagtem Hydraulikmedium umfassend einen einen Zylinderinnenraum (112) aufweisenden Gehäusekörper (114) und ein in dem Zylinderinnenraum (112) beweglich gelagertes Plungerelement (138), wobei eine zumindest teilweise durch zumindest einen Teil des Plungerelements (138) begrenzte Druckkammer (142) für die Druckbeaufschlagung eines Hydraulikmediums in dem Zylinderinnenraum (112) ausgebildet ist und wobei zumindest ein Dichtungselement (182, 188, 256) zum Abdichten der Druckkammer (142) zwischen dem Plungerelement (138) und dem Gehäusekörper (114) bezogen auf eine Betätigungsbewegung des Plungerelements (138) statisch relativ zum Gehäusekörper (114) in dem Zylinderinnenraum (112) angeordnet ist.

2. Gebereinheit (100) nach Anspruch 1, **dadurch gekennzeichnet,**
- **dass** zumindest der Plungerkörper (152) des Plungerelements (138) aus Kunststoff, insbesondere aus einem Duroplast, ausgebildet ist und/oder
- **dass** der Gehäusekörper (114) aus Kunststoff ausgebildet ist.

3. Gebereinheit (100) nach einem der voranstehenden Ansprüche, **dadurch gekennzeichnet,**
- **dass** zumindest einige, insbesondere sämtliche, der zwischen dem Plungerelement (138) und dem Gehäusekörper (114) abdichtenden Dichtungselemente (182, 188) bezogen auf die Betätigungsbewegung des Plungerelements (138) statisch relativ zum Gehäusekörper (114) in dem Zylinderinnenraum (112) angeordnet sind
und/oder
- **dass** zumindest ein relativ zum Gehäusekörper (114) statisch angeordnetes Dichtungselement (182, 188, 256) bezüglich einer Führungsfläche (148) eines Führungsabschnitts (146) in einer zu einer Zylinderachse (122) radialen Richtung zurückversetzt angeordnet ist
und/oder
- **dass** in dem Zylinderinnenraum (112) zumindest eine axiale Festlegungsfläche (176, 235) zur insbesondere positionsgetreuen Anlage für zumindest ein Dichtungselement (182, 188, 256) vorgesehen ist
und/oder
- **dass** zumindest ein Dichtungselement (182, 188, 256) in zu der Zylinderachse (122) axialen Richtung zwischen zwei Festlegungsflächen (176, 235) angeordnet ist, insbesondere zwischen diesen gehalten wird
und/oder
- **dass** zumindest eine axiale Festlegungsfläche (176, 235) durch eine Stufe (174) in einer Zylinderwand (128) des Gehäusekörpers (114) ausgebildet ist.

4. Gebereinheit (100) nach einem der voranstehenden Ansprüche, **dadurch gekennzeichnet,**
- **dass** zumindest ein Sicherungselement (234) für ein insbesondere positionsgetreues Halten zumindest eines Dichtungselements (182, 188, 256) in dem Zylinderinnenraum (112) angeordnet ist, wobei das zumindest eine Sicherungselement (234) zumindest eine axiale Festlegungsfläche (176, 235) ausbildet
und/oder
- **dass** das zumindest eine Sicherungselement (234) zumindest einen Sicherungsring (232, 262) zum Festlegen einer Position zumindest eines Dichtungselementes (182, 188, 256) aufweist, wobei insbesondere der zumindest eine Sicherungsring (232, 262) federbeaufschlagt ist
und/oder
- **dass** der insbesondere federbeaufschlagte Sicherungsring (232, 262) des Sicherungselements (234) an einem in dem Zylinderinnenraum (112) ausgebildeten axialen Anschlag (236) anliegt.

5. Gebereinheit (100) nach einem der voranstehenden Ansprüche, **dadurch gekennzeichnet,**
- **dass** in zur Zylinderachse (122) axialer Richtung zwischen einem die Hydraulikkammer (184) nach außen abdichtenden Dichtungselement (182) und einem die Druckkammer (142) abdichtenden Dichtungselement (188) ein Distanzelement (212) angeordnet ist und/oder
- **dass** das Distanzelement (212) zumindest eine Fluidführungsaussparung aufweist und insbesondere die Fluidführungsaussparung eine in zumindest einigen zu einem Grundzustand korrespondierenden Stellungen des Plungerelementes ausgebildete fluidführende Verbindung zwischen einem Raumbereich der Hydraulikkammer (184), in welchen ein Ausgleichskanal (434) mündet, und der Druckkammer (142) zumindest teilweise ausbildet und/oder
- **dass** die Fluidführungsaussparung durch zumindest einen Durchbruch (444), der von einer der Zylinderwand (128) zugewandten Seite des Distanzelements (212) zu einer dem Plungerelement (138) zugewandten Seite des Distanzelements (212) verläuft, und/oder zumindest einen auf der dem Plungerelement (138) zugewandten Seite zurückgesetzten, insbesondere relativ zu einem das Plungerelement (138) kontaktierenden Abschnitt zurückgesetzten, Abschnitt (446) ausgebildet wird und insbesondere sich zumindest ein Durchbruch (444) in einen zurückgesetzten Abschnitt (446) öffnet.

6. Gebereinheit (100) nach einem der voranstehenden Ansprüche, **dadurch gekennzeichnet,**
- **dass** ein insbesondere mit einem Reservoirraum (436) verbundener, Ausgleichskanal (434) an einer Mündungsöffnung (432) in eine Hydraulikkammer (184) mündet, wobei insbesondere die Mündungsöffnung (432) bezogen auf eine axiale Richtung der Zylinderachse (122) zwischen zwei zwischen dem Plungerelement (138) und dem Gehäusekörper (114) abdichtenden Dichtungselementen (182, 188) ausgebildet ist
und/oder
- **dass** das Plungerelement (138), insbesondere an seinem druckkammerseitigen Teil, zumindest eine Aussparung aufweist, welche in zu dem Grundzustand korrespondierenden Stellungen des Plungerelements (138) eine Fluidverbindung zwischen der Druckkammer (142) und der Mündungsöffnung (432) ausbildet, und wobei diese Fluidverbindung in zu dem druckbeaufschlagenden Zustand korrespondierenden Stellungen des Plungerelements (138) geschlossen ist.

7. Gebereinheit (100) zur Bereitstellung von druckbeaufschlagtem Hydraulikmedium, insbesondere nach einem der voranstehenden Ansprüche, umfassend einen Gehäusekörper (114) mit einem sich von einer Betätigungsöffnung (124) bis zu einer Zylinderbodenöffnung (134) durch den Gehäusekörper (114) hindurch erstreckenden Zylinderinnenraum (112), wobei ein Zylinderbodenelement (252) zumindest im Bereich der Zylinderbodenöffnung (134) in dem Zylinderinnenraum (112) insbesondere lösbar befestigt ist.

8. Gebereinheit (100) nach einem der voranstehenden Ansprüche, **dadurch gekennzeichnet,**
- **dass** durch eine Federbeaufschlagung das Zylinderbodenelement (252) in einem in dem Zylinderinnenraum befestigten Zustand gehalten wird
und/oder
- **dass** das Zylinderbodenelement (252) mit einem Bajonettverschluss in der Zylinderbodenöffnung (134) insbesondere lösbar befestigt ist und/oder
- **dass** ein gleiches Sicherungselement (234) ein zwischen dem Zylinderbodenelement (252) und dem Gehäusekörper (114) abdichtendes Dichtungselement (256) und zumindest ein zwischen dem Plungerelement (138) und dem Gehäusekörper (114) abdichtendes Dichtungselement (182, 188) in ihren Positionen festlegt.

9. Gebereinheit (100) zur Bereitstellung von druckbeaufschlagtem Hydraulikmedium, insbesondere nach einem der voranstehenden Ansprüche, umfassend ein Plungerelement (138) und ein Zylinderbodenelement (252), welche durch eine Haltevorrichtung (310) zu einer Einsatzbaugruppeneinheit (140) zusammengehalten werden.

10. Gebereinheit (100) nach einem der voranstehenden Ansprüche, **dadurch gekennzeichnet,**
- **dass** die Haltevorrichtung (310) ein bodenseitiges Halteelement (314) und ein plungerseitiges Halteelement (312) umfasst
und/oder
- **dass** das bodenseitige Halteelement (314) und das plungerseitige Halteelement (312) zusammen eine Schnappvorrichtung ausbilden und/oder miteinander verrastet sind.

11. Gebereinheit (100) nach einem der voranstehenden Ansprüche, **dadurch gekennzeichnet,**
- **dass** die Haltevorrichtung (310) das Plungerelement (138) und das Zylinderbodenelement (252) in einer Maximalstellung relativ zueinander hält und eine Relativbewegung der beiden Elemente (138, 252) über die Maximalstellung hinaus blockiert
und/oder
- **dass** ein durch die Maximalstellung definierter Maximalabstand zwischen dem Plungerelement (138) und dem Zylinderbodenelement (252) größer ist als Abstände, die das Plungerelement (138) und das Zylinderbodenelement (252) in einem in den Zylinderinnenraum (112) verbauten Zustand relativ zueinander einnehmen
und/oder
- **dass** die Haltevorrichtung (310) eine vorgespannte Feder (362) umfasst, welche das Plungerelement (138) in Richtung der Maximalstellung beaufschlagt
und/oder
- **dass** eine Feder (362) der Haltevorrichtung (310) in einen Innenraum (342) des Plungerkörpers (152) eingreift und insbesondere in dem Innenraum (342) das plungerseitige Halteelement (312) hält
und/oder
- **dass** eine das Plungerelement (138) in Richtung des Grundzustands beaufschlagende Plungerfeder (552) auch eine Feder (362) der Haltevorrichtung (310) ausbildet.

12. Gebereinheit (100) nach einem der voranstehenden Ansprüche, **dadurch gekennzeichnet,**
- **dass** das Zylinderbodenelement (252) eine zumindest ein druckkammerseitiges Teil des Plungerelements (138) zumindest teilweise stabilisierend umgebende Fassung (372) umfasst
und/oder
- **dass** die Fassung (372), insbesondere ein Wandabschnitt (374) der Fassung (372), in zur Zylinderachse (122) radialer Richtung von der Zylinderwand (374) beabstandet ist.

13. Gebereinheit (100) nach einem der voranstehenden Ansprüche, **dadurch gekennzeichnet,**
- **dass** die Baugruppeneinheit (140) zumindest ein Dichtungselement (182, 188, 256), insbesondere zumindest ein Dichtungselement (256) zum Abdichten zwischen dem Zylinderbodenelement (252) und dem Gehäusekörper (114) und/oder zumindest ein Dichtungselement (182, 188) zum Abdichten zwischen dem Plungerelement (138) und dem Gehäusekörper (114), umfasst und/oder
- **dass** die Einsatzbaugruppeneinheit (140) das Sicherungselement (234) und/oder das Distanzelement (212) umfasst.

14. Gebereinheit (100) nach einem der voranstehenden Ansprüche, **dadurch gekennzeichnet,**
- **dass** diese einen Ausgleichsbehälter (438) mit einem Reservoirraum (436) umfasst, und dass insbesondere der Ausgleichsbehälter (438) zumindest teilweise von dem Gehäusekörper (114) ausgebildet wird und/oder
- **dass** der Ausgleichsbehälter (438) ein Deckelelement (472) umfasst, wobei das Deckelelement (472) zumindest teilweise durch das Zylinderbodenelement (252) in einem geschlossenen Zustand des Ausgleichsbehälters (438) gehalten wird und/oder
- **dass** das Deckelelement (472) zumindest einen Haltearm (522), insbesondere zwei Haltearme (522), umfasst, welcher/welche zumindest in dem geschlossenen Zustand des Ausgleichsbehälters (438) das Zylinderbodenelement (252) zumindest teilweise umgreift/umgreifen
und/oder
- **dass** in dem geschlossenen Zustand des Ausgleichsbehälters (438) das Deckelelement (472), insbesondere zumindest ein Hakenvorsprung (528) zumindest eines Haltearms (522), eine Öffnungsbewegung des Zylinderbodenelements (252) blockiert und/oder
- **dass** zumindest ein Haltearm (522), insbesondere dessen Hakenvorsprung (528), eine Aussparung (534) aufweist, durch welche ein von dem Haltearm (522) blockiertes Verschlusselement (272) zum Lösen der Blockierung hindurchführbar ist.

15. Gebereinheit (100) nach einem der voranstehenden Ansprüche, **dadurch gekennzeichnet,**
- **dass** eine insbesondere in der Zylinderwand (374) ausgebildete Auslassöffnung (412) in den Zylinderinnenraum (112), insbesondere die Druckkammer (142), mündet
und/oder
- **dass** die Auslassöffnung (412) im axialen Bereich, in welchem das zumindest ein Dichtungselement in seiner Position festlegende Sicherungselement (234) angeordnet ist, in der Zylinderwand (128) ausgebildet ist
und/oder
- **dass** ein zumindest ein von dem Gehäusekörper (114) ausgebildeter Anschlussstutzen (418) und/oder ein Druckanschluss (416) der Gebereinheit (100) so ausgebildet ist, dass dieser sich zumindest in einem ordnungsgemäß an einen Lenker eines lenkergeführten Fahrzeugs montierten Zustand der Gebereinheit (100) zumindest näherungsweise parallel zu einer Lenkererstreckungsrichtung erstreckt.

16. Gebereinheit (100) nach einem der voranstehenden Ansprüche, **dadurch gekennzeichnet,**
- **dass** diese eine handbetätigte Gebereinheit (100) ist
und/oder
- **dass** diese eine Halterung (592) zum Befestigen derselben an einem Lenker aufweist, wobei insbesondere eine Außenseite des Zylinderbodenelements (252) eine äußere Auflagefläche (599) zur Anlage an den Lenker ausbildet.

17. Fahrzeug, insbesondere lenkergeführtes Fahrzeug, umfassend ein Hydrauliksystem mit einer Gebereinheit (100) nach einem der voranstehenden Ansprüche.
